# EUROPÄISCHE PATENTSCHRIFT

(11) **EP 2 157 335 B1**
(45) Veröffentlichungstag und Bekanntmachung des Hinweises auf die Patenterteilung: **09.01.2013**
(21) Anmeldenummer: 09165503.5
(22) Anmeldetag: 15.07.2009
(51) Int. Cl.: F16H 45/02, B21J 15/38, F16D 13/70

(54) **Gehäuse-Kolben-Baugruppe für eine Kopplungseinrichtung und Montageverfahren**
Casing-piston sub-assembly for a coupling device and assembly method
Sous groupe boîtier-piston pour un dispositif d'accouplement et procédé de montage de celui-ci

(30) Priorität: 18.02.2009 DE 102009000959; 18.08.2008 DE 102008041308; 04.02.2009 US 149791 P
(43) Veröffentlichungstag der Anmeldung: 24.02.2010
(73) Patentinhaber: ZF Friedrichshafen AG, 88038 Friedrichshafen (DE)
(72) Erfinder: Heuler, Michael, 97080, Würzburg (DE); Frey, Peter, 97440, Gerolzhofen (DE); Reinhardt, Bernd, Farmington Hills, MI 48335 (US); Rediger, Patrick, 97421, Schweinfurt (DE); Münch, Matthias, 06188, Landsberg (DE); Zühl, Carsten, 97424, Schweinfurt (DE); Scordino, Mike, Northville, MI 48168 (US); Umnus, Claus, Northville, MI 48168 (US); Cuperka, Juraj, Northville, MI 48168 (US); Hamblin, Ray, Northville, MI 48168 (US); Walter, Oliver, Northville, MI 48168 (US)

(56) Entgegenhaltungen:
- WO-A-99/01683
- DE-A1- 4 111 963
- FR-A- 2 726 620

## Beschreibung

Die Erfindung betrifft ein Abstützelement zur Verwendung in einer Gehäuse-Kolben-Baugruppe für eine Kopplungseinrichtung, insbesondere eine nasslaufende Lamellenkupplung oder eine Überbrückungskupplung einer hydrodynamischen Kopplungseinrichtung, umfassend Ambossabschnitte, die in einer Vernietungsposition des Abstützelements in der Gehäuse-Kolben-Baugruppe hinter Setzköpfen von Nieten zwischen Kolben und Kopplungselementen und/oder zwischen Kopplungselementen und Gehäuse positionierbar sind.

Eine Gehäuse-Kolben-Baugruppe der eingangs genannten Art ist in der internationalen Veröffentlichung WO 99/01683 bzw. in der korrespondierenden DE 198 81 000 T1 offenbart. Diese Druckschriften betreffen einen hydrodynamischen Momentwandler, der im Inneren eines mit Öl befüllten dichten Gehäuses einen Drehmomentwandler mit einem Turbinenrad und einem Pumpenrad und eine verriegelbare Kupplung umfasst, wobei mittels der verriegelbaren Kupplung das Turbinenrad mechanisch drehfest mit dem Pumpenrad verbunden werden kann. Das Gehäuse bildet ein Eingangselement des während des Betriebs rotierenden Momentwandlers, während eine Nabe, die drehfest mit dem Turbinenrad verbunden ist, das Ausgangselement des Momentwandlers bildet. Zur Betätigung der verriegelbaren Kupplung ist ein Kolben vorgesehen, der drehfest mit dem Gehäuse verbunden ist, das als Gegenkolben dient, und axial zu diesem beweglich angeordnet ist. Die drehfeste Verbidung zwischen dem Kolben und dem Gehäuse wird mittels Kopplungselementen bewirkt, die als blattfederartige Zungen ausgebildet sind. Diese blattfederartigen Zungen werden sowohl mit dem Kolben als auch mit dem Gehäuse mittels Nieten verbunden. Dabei kann die Vernietung so vonstatten gehen, dass zunächst die Zungen mit dem Gehäuse vernietet werden, z. B. durch bereits am Gehäuse angeformte Nietbolzen. Um die Zungen dann mit dem Kolben zu vernieten, müssen die dazu verwendeten Niete beidseitig zugänglich sein, um das Nietwerkzeug und den Gegenhalter in Eingriff bringen zu können. Dazu sind im Gehäuse Zugangslöcher vorgesehen, die nach der Vernietung mit einem Stopfen verschlossen werden. Wenn umgekehrt zuerst die Vernietung der Zungen mit dem Kolben stattfindet und im zweiten Schritt die Zungen mit dem Gehäuse vernietet werden, sind entsprechende Zugangslöcher im Kolben vorgesehen, die ebenfalls nach der Vernietung mit einem Stopfen verschlossen werden können.

In Jedem Fall ist also nach der eigentlichen Vernietung ein weiterer Arbeitsschritt, nämlich das Einsetzen eines Stopfens in das jeweilige Zugangsloch, nötig. Ebenso müssen in der Fertigung von Gehäuse bzw. Kolben diese Löcher entsprechend vorgesehen werden, beispielsweise durch Einbringen von Bohrungen. Weiterhin kann nicht ausgeschlossen werden, dass sich durch die vorzusehenden Löcher eine Beeinträchtigung der Stabilität der Strukturen oder möglicherweise auch Undichtigkeiten ergeben.

Es ist also Aufgabe der vorliegenden Erfindung, eine Möglichkeit vorzusehen, wie eine eingangs genannte Gehäuse-Kolben-Baugruppe für eine Kopplungseinrichtung montiert werden kann, ohne dass Zugangslöcher in Gehäuse und/oder Kolben, wie sie gemäß dem Stand der Technik vorgesehen sind, erforderlich sind.

Diese Aufgabe wird gelöst durch ein Abstützelement zur Verwendung in einer Gehäuse-Kolben-Baugruppe für eine Kopplungseinrichtung, insbesondere eine nasslaufende Lamellenkupplung oder eine Überbrückungskupplung einer hydrodynamischen Kopplungseinrichtung, welches Ambossabschnitte umfasst, die in einer Vernietungsposition des Abstützelements in der Gehäuse-Kolben-Baugruppe hinter Setzköpfen von Nieten zwischen Kolben und Kopplungselementen und/oder zwischen Kopplungselementen und Gehäuse positionierbar sind.

Weiterhin wird die Aufgabe auch gelöst durch ein Verfahren zur Montage einer Gehäuse-Kolben-Baugruppe einer Kopplungseinrichtung, insbesondere einer nasslaufenden Lamellenkupplung oder einer Überbrückungskupplung einer hydrodynamischen Kopplungseinrichtung, wobei der Kolben mittels Kopplungselementen bewegbar an einem Gehäuse befestigt wird und als Befestigungselement zwischen Kolben und Kopplungselementen und/oder zwischen Kopplungselement und Gehäuse Niete vorgesehen sind, wobei in einem ersten Schritt die Kopplungselemente an einer der Baugruppen von Kolben und Gehäuse vorgesehen werden und in einem zweiten Schritt die Kopplungselemente mit der anderen Baugruppe, also mit dem Gehäuse bzw. mit dem Kolben vernietet werden, bei dem vor der Vernietung im zweiten Schritt mindestens ein Abstützelement in einer Vernietungsposition so zwischen Kopplungselementen und der anderen Baugruppe von Kolben und Gehäuse positioniert wird, dass Ambossabschnitte des Absbützelements hinter Setzköpfen der jeweiligen Niete liegen und daraufhin eine Vernietung der Kopplungselemente mit der anderen Baugruppe vorgenommen wird. Wie die Kopplungselemente im ersten Schritt an der jeweiligen Baugruppe vorgesehen werden, ist dabei für die Ausführung des Verfahrens unerheblich. Die Kopplungselemente können beispielsweise ebenso durch Vernieten oder auch durch andere Befestigungsarten, wie Schweißen, Schrauben etc., an der ersten Baugruppe vorgesehen werden, oder auch an dieser Baugruppe angeformt sein.

Durch die Einführung bzw. Verwendung eines Abstützelements, das jeweils zwischen die bereits in einem ersten Schritt miteinander verbundenen, beispielsweise vernieteten oder einstückig ausgebildeten, Bauteile eingeführt wird und Ambossabschnitte aufweist, die hinter den Setzköpfen der noch zu schließenden Niete zu liegen kommen, können nun die im zweiten Schritt noch zu vernietenden Bauteile von der jeweils zugänglichen Vorderseite her vernietet werden, ohne dass Zugriffsöffnungen im Gehäuse bzw. im Kolben erforderlich wären. Es müssen somit keine entsprechenden Löcher mehr vorgesehen und nach der Vernietung verschlossen werden. Dadurch können Herstellung und Montage vereinfacht und kostengünstiger gestaltet werden und es können eventuelle Beeinträchtigungen der Stabilität und/oder der Dichtigkeit vermieden werden.

Vorzugsweise weist das Abstützelement genau so viele Ambossabschnitte auf wie Niete vorgesehen sind, wobei die Ambossabschnitte natürlich auch geeignet räumlich anzuordnen sind, beispielsweise auf einer Kreisteilung, die der Anordnung der Niete entspricht. Es kann aber auch vorgesehen sein, dass das Abstützelement weniger Ambossabschnitte aufweist als Niete vorgesehen sind, im Extremfall auch nur einen einzigen Ambossabschnitt, wobei in so einem Fall das Element während des Vernietungsvorgangs ggf. mehrfach neu positioniert werden muss. Das Abstützelement kann aus jedem geeigneten Material hergestellt sein, beispielsweise Kunststoff, Metall, oder einer Mischung verschiedener Materialien.

Es kann vorgesehen sein, dass das Abstützelement nach der Vernietung aus der Gehäuse-Kolben-Baugruppe entfernbar ist bzw. entfernt wird. Alternativ kann auch vorgesehen sein, dass das Abstützelement nach der Vernietung in der Gehäuse-Kolben-Baugruppe verbleibt und in einer Freigabeposition so positionierbar ist bzw. positioniert wird, dass die Ambossabschnitte des Abstützelements eine Bewegung des Kolbens, insbesondere in der zur Betätigung der Kupplung erforderlichen axialen Richtung, nicht beeinträchtigen. Das Abstützelement kann dazu mindestens ein Angriffselement aufweisen, an dem eine zur Positionierung, vorzugsweise Verdrehung oder Verschiebung, des Abstützelements eingerichtetes Element angreifen kann. Zur Positionierung des Abstützelements kann die Gehäuse-Kolben-Baugruppe ein in das Gehäuse einsetzbares Zentrierelement aufweisen, welches mindestens ein Gegenangriffselement zum Angriff an dem mindestens einen Angriffselement des Abstützelements aufweist. Es kann aber zur Positionierung des Abstützelements auch ein separates Werkzeug mit mindestens einem entsprechenden Gegenangriffselement vorgesehen werden. Nach der Positionierung des Abstützelements in der Freigabeposition wird das Abstützelement vorzugsweise in dieser fixiert.

Das genannte Zentrierelement kann auch schon vor einer Vernietung im zweiten Schritt des erfindungsgemäßen Verfahrens eingesetzt werden und kann dann in vorteilhafter Weise eine Zentrierfunktion erfüllen, in der es Kolben und/oder Abstützelement temporär fixiert und beispielsweise das Abstützelement in der Vernietungsposition hält. Nach der Vernietung kann das Zentrierelement verdreht werden, wobei das Abstützelement aufgrund des Zusammenwirkens von Angriffselement(en) und Gegenangriffselement(en) in die Freigabeposition mitgenommen wird. In dieser Position kann das Zentrierelement dann fixiert werden, beispielsweise durch Schweißen, Nieten oder jede andere Befestigungsart, wobei damit auch das Abstützelement fixiert wird.

In jedem Fall kann durch eine entsprechende Gestaltung des Kolbens oder des Gehäuses die Verdrehbarkeit des Abstützelements für den Arbeitsschritt des Verdrehens nach dem Vernieten geeignet begrenzt werden, so dass eine falsche Winkellage des Abstützelements nach dem Fixieren nicht auftreten kann. Gegebenenfalls kann auch eine Einrastung bzw. ein Einschnappen des Abstützelement oder des Zentrierelements am Gehäuse oder am Kolben vorgesehen werden, so dass das Abstützelement nur bis zur richtigen Stellung verdreht werden kann und dann in der Winkellage, die der Freigabeposition entspricht, fixiert bleibt. Diese Maßnahmen zur Verdrehsicherung können natürlich unabhängig von der konkreten Ausgestaltung des Abstützelements vorgesehen werden, und können analog auch angewandt werden, falls das Abstützelement nicht durch Rotation, sondern durch eine andere Bewegung aus der Vernietungsposition in die Freigabeposition überführt wird.

Das Zentrierelement kann beispielsweise eine mit einem Gehäusedeckel der Gehäuse-Kolben-Baugruppe in einem zentralen Bereich desselben fest zu verbindende Deckelnabe sein, über die beispielsweise im Betrieb der Gehäuse-Kolben-Baugruppe die Rotation des Gehäusedeckels vermittelt wird.

Insbesondere ein Abstützelement, welches nach der Vernietung in der Gehäuse-Kolben-Baugruppe verbleibt, kann ringförmig ausgebildet sein, wobei die Ambossabschnitte durch radiale Vorsprünge am Innen- oder Außenumfang eines vom Abstützelement umfassten Rings gebildet werden können. Alternativ kann das Abstützelement auch sternförmig ausgebildet sein, wobei die Ambossabschnitte von den freien Endbereichen des Sterns gebildet werden. Diese freien Endbereiche können beispielsweise die Enden von Strahlen oder Armen einer sternförmigen Struktur sein, die als Ambossabschnitte ausgebildet sind oder an denen die Ambossabschnitte angeordnet sind. Durch eine Verdrehung des Rings oder Sterns können die Ambossabschnitte nach der Vernietung dann leicht aus der Vernietungsposition in die Freigabeposition überführt werden.

Insbesondere wenn das Abstützelement nach der Vernietung aus der Gehäuse-Kolben-Baugruppe wieder entfernt werden soll, kann das Abstützelement flexible Halteelemente umfassen, an denen die Ambossabschnitte vorgesehen sind. Diese flexiblen Halteelemente können beispielsweise in Form von biegsamen Drähten, flexiblen Kunststoff- oder dünnen Blechelementen oder ähnlichem oder auch in Form von Ketten oder Schnüren ausgebildet sein oder können aus beweglich miteinander verbundenen Einzelelementen bestehen. Die flexiblen Halteelemente können beispielsweise die genannten Strahlen oder Arme einer sternförmigen Struktur sein. Jeweils am Ende der flexiblen Halteelemente können die Ambossabschnitte dann als feste Plättchen, beispielsweise als Metallplättchen, ausgebildet sein. Dabei können die Ambossabschnitte integraler Teil der Halteelemente sein oder auch an diesen befestigt sein. Es kann vorgesehen sein, dass die flexiblen Halteelemente eine geringere Dicke aufweisen als die Ambossabschnitte.

Insbesondere, aber nicht nur, wenn keine flexiblen Halteelemente vorgesehen sind, kann das Abstützelement beispielsweise komplett, ggf. einstückig, aus einem Vollmaterial, beispielsweise Stahlblech, hergestellt sein. Es kann dabei vorzugsweise ein dünnes, kostengünstiges Stahlblech verwendet werden, wobei die Ambossabschnitte zusätzliche Stabilität dadurch gewinnen können, dass das Stahlblech im Bereich der Ambossabschnitte, beispielsweise durch Falzen, doppelt gelegt wird.

Wenn flexible Halteelemente vorgesehen sind, dann können diese so ausgestaltet sein, dass sie nicht in alle Richtungen gleichermaßen flexibel sind. Dies bedeutet, dass die Halteelemente beispielsweise in einer Richtung, die vorzugsweise senkrecht zur Richtung der längsten Ausdehnung der Halteelemente steht, verformbar sind, um ein Einführen der flexiblen Halteelemente in die Gehäuse-Kolben-Baugruppe auch um etwaige Biegungen herum zu ermöglichen, und in einer anderen Richtung, vorzugsweise einer Richtung, die sowohl zur Längsrichtung als auch zur flexiblen Richtung senkrecht steht, weniger oder gar nicht verformbar sind, um beim Einführen in die Gehäuse-Kolben-Baugruppe eine seitliche Führung zu ermöglichen. Die flexiblen Halteelemente können auch so ausgestaltet sein, dass sie zum Einbringen des Abstützelements in die Gehäuse-Kolben-Baugruppe in einen flexiblen Zustand und zum Vernieten in einen unflexiblen Zustand bringbar sind. Dadurch kann ein leichtes Einführen der Halteelemente und damit der Ambossabschnitte in die Gehäuse-Kolben-Baugruppe ermöglicht werden und gleichzeitig eine stabile, möglichst fixierte Lage des Abstützelements in der Vernietungsposition erreicht werden.

Die flexiblen Halteelemente können insbesondere einzelne, beweglich miteinander verbundene Einzelelemente oder Kettenglieder aufweisen. Diese Einzelelemente oder Kettenglieder können durch mindestens ein Band oder Seil oder auch durch Scharniere miteinander verbunden sein. Weiterhin kann mindestens ein Band oder Seil so durch mehrere oder entlang mehrerer Kettenglieder geführt und mit mindestens einem Kettenglied verbunden sein, dass durch Ziehen des Bands oder Seils die Kettenglieder miteinander verspannbar sind. Durch diese Verspannung kann auf einfache Weise ein unflexibler Zustand der Halteelemente erzielt werden, der die bereits beschriebene Fixierung in der Vernietungsposition ermöglicht. Wird die Verspannung gelöst, so sind die Kettenglieder gegeneinander beweglich, so dass das Einführen der Halteelemente und damit der Ambossabschnitte in die Gehäuse-Kolben-Baugruppe und ebenso das Herausziehen nach dem Vernieten erleichtert wird.

Weiterhin wird die vorgenannte Aufgabe gelöst durch die Bereitstellung einer Hilfsvorrichtung zum Vernieten einer Gehäuse-Kolben-Baugruppe für eine Kopplungseinrichtung, insbesondere eine nasslaufende Lamellenkupplung oder eine Überbrückungskupplung einer hydrodynamischen Kopplungseinrichtung, die ein vorgenanntes Abstützelement mit flexiblen Halteelementen, an denen die Ambossabschnitte vorgesehen sind, umfasst.

Diese Hilfsvorrichtung kann insbesondere eine erste Zentriereinrichtung zur Zentrierung des Abstützelements in der Gehäuse-Kolben-Baugruppe aufweisen. Diese Zentriereinrichtung kann beispielsweise eine Struktur wie etwa ein gestufter Ring oder ähnliches sein, die in eine Aussparung im Gehäusedeckel, insbesondere die Aussparung zur späteren Aufnahme einer Deckelnabe, eingesetzt werden kann. Auf diese Weise kann sichergestellt werden, dass die Hilfsvorrichtung in der Gehäuse-Kolben-Baugruppe korrekt positioniert wird, so dass auch die an den flexiblen Halteelementen angeordneten Ambossabschnitte korrekt in der Vernietungsposition hinter den Setzköpfen der Niete positioniert werden können.

Alternativ oder zusätzlich kann auch eine zweite Zentriereinrichtung vorgesehen sein, die zur Zentrierwechselwirkung mit dem Kolben während des Vernietens dient. Insbesondere, wenn die zweite Zentriereinrichtung zusätzlich zur ersten Zentriereinrichtung vorgesehen ist, kann so sichergestellt werden, dass der Kolben, der somit mittels der Hilfsvorrichtung eine definierte Position bezüglich des Gehäuses einnimmt, in die richtige Position zur Vernietung gebracht werden kann. Wenn die zweite Zentriereinrichtung an Stelle der ersten Zentriereinrichtung vorgesehen ist, so kann die korrekte Positionierung der Hilfsvorrichtung relativ zur gesamten Baugruppe dadurch eingestellt werden, dass der Kolben bezüglich der bereits mit dem Gehäuse vernieteten Kopplungselemente so ausgerichtet wird, dass eine Vernietung des Kolbens mit den Kopplungselementen möglich ist, wodurch sich auch eine definierte Position der Hilfsvorrichtung bezüglich des Gehäuses ergibt. Die Positionierung des Kolbens bezüglich der Kopplungselemente kann dadurch stattfinden, dass die vorgesehenen Löcher für die Aufnahme der Niete zur Deckung gebracht werden. Es kann aber auch vorgesehen sein, dass die Niete bereits beim Aufsetzen des Kolbens an den Kopplungselementen oder am Kolben vorgesehen sind, so dass die Niete Führungen für den Kolben und damit indirekt auch für die Hilfsvorrichtung zur Verfügung stellen. Um eine zumindest temporäre Halterung der Niete an den Kopplungselementen oder am Kolben zu ermöglichen, können die Niete in Löchern der Kopplungselemente oder des Kolbens geklemmt sein, beispielsweise durch eine Presspassung. Stattdessen können die Niete aber auch fest an den Kopplungselementen oder am Kolben vorgesehen sein, beispielsweise indem sie daran angeformt sind.

Vorzugsweise umfasst die Hilfsvorrichtung Führungselemente zur Aufnahme und/oder Führung der flexiblen Halteelemente des Abstützelements, wobei die Halteelemente beweglich in den Führungselementen aufgenommen sind oder entlang der Führungselemente geführt werden, so dass die Ambossabschnitte in eine Ruheposition und eine Vernietungsposition verlagert werden können. Mit einer derartigen Führung kann eine einfache und sichere Positionierung der Ambossabschnitte mittels der flexiblen Halteelemente ermöglicht werden.

Es kann vorgesehen sein, dass die Hilfsvorrichtung eine Einrichtung zum Einführen der flexiblen Halteelemente in die Gehäuse-Kolben-Baugruppe und/oder eine Einrichtung zum Herausziehen der flexiblen Halteelemente aus der Gehäuse-Kolben-Baugruppe aufweist. Damit kann eine bessere Reproduzierbarkeit der Positionierung gewährleistet werden als bei einer rein manuellen Einführung, und es kann ggf. die benötigte Kraft, insbesondere zum Herausziehen nach dem Vernieten, verringert werden. Dazu kann eine Zug- und/oder Schubstange vorgesehen sein, die zum Einbringen und/oder Herausziehen der flexiblen Halteelemente mit dem Abstützelement verbunden oder koppelbar ist. Diese Zug- und/oder Schubstange kann beispielsweise durch einen Hebelmechanismus betätigt werden.

In dem bereits beschriebenen Verfahren zur Montage einer Gehäuse-Kolben-Baugruppe kann insbesondere ein oben stehend beschriebenes Abstützelement oder eine beschriebene Hilfsvorrichtung verwendet werden. Dabei können die Ambossabschnitte in die Vernietungsposition gebracht werden, indem die flexiblen Halteelemente des Abstützelements entlang von Führungselementen in die Gehäuse-Kolben-Baugruppe eingeführt werden. Genauso können auch die Ambossabschnitte aus der Vernietungsposition herausgebracht werden, indem sie entlang von Führungselementen aus der Gehäuse-Kolben-Baugruppe herausgezogen werden. Durch den Einsatz von Führungselementen kann einerseits sichergestellt werden, dass die Positionierung der Ambossabschnitte in der Vernietungsposition korrekt stattfindet und andererseits, dass die Ambossbabschnitte und die Halteelemente beim Einführen und/oder Herausziehen nicht in unerwünschter Weise mit Bauteilen der Gehäuse-Kolben-Baugruppe kollidieren und möglicherweise Schäden hervorrufen oder sich verklemmen, verhaken oder ähnliches können.

Es kann vorgesehen sein, dass die flexiblen Halteelemente des Abstützelements nach dem Positionieren oder zum Positionieren in der Vernietungsposition in einen unflexiblen Zustand überführt werden. Wie bereits erwähnt, kann so eine sichere Fixierung der Ambossabschnitte in der Vernietungsposition gewährleistet werden. Es kann dabei vorgesehen sein, dass die Ambossabschnitte richtig positioniert werden und dann erst die Halteelemente in den unflexiblen Zustand überführt werden, oder bei der Überführung in den unflexiblen Zustand gleichzeitig die richtige Positionierung vorgenommen wird.

Schließlich kann es vorgesehen sein, dass die Gehäuse-Kolben-Baugruppe nach der Montage einem automatisierten Inspektionsprozess unterzogen wird. Damit ist eine Überprüfung möglich, ob insbesondere die Vernietung korrekt stattgefunden hat.

Das erfindungsgemäße Verfahren ist hier als Verfahren zur Montage einer Gehäuse-Kolben-Baugruppe beschrieben worden. Allerdings kann ein derartiges Verfahren natürlich auch bei anderen Montageaufgaben, in denen ähnliche Bedingungen wie beim Vernieten einer Gehäuse-Kolben-Baugruppe herrschen, eingesetzt werden, also insbesondere dann, wenn mehrere Elemente miteinander zu vernieten sind, die in einem Verfahrensschritt einen direkten Zugriff auf die Setzköpfe einzelner Niete erschweren oder unmöglich machen. Dem Fachmann werden sich hier weitere Anwendungsmöglichkeiten, insbesondere bei der Montage von Kraftfahrzeugen, Fahrrädern etc., eröffnen. Dementsprechend ergeben sich auch weitere Einsatzmöglichkeiten für ein erfindungsgemäßes Abstützelement oder eine erfindungsgemäße Hilfsvorrichtung zum Vernieten.

Die Erfindung wird im Folgenden anhand von Figuren näher erläutert. Dabei zeigen:
- Fig. 1: einen Ausschnitt aus einer erfindungsgemäßen Gehäuse-Kolben-Baugruppe mit eingelegtem Abstützelement in Vernietungsposition;
- Fig. 2: eine Ausbildungsform eines erfindungsgemäßen Abstützelements;
- Fig. 3: eine dreidimensionale Explosionsdarstellung einer Ausbildungsform einer erfindungsgemäßen Gehäuse-Kolben-Baugruppe mit dem Abstützelement in Vernietungsposition;
- Fig. 4a und 4b: eine seitliche Schnittansicht sowie eine Ansicht von oben einer Hilfsvorrichtung zum Vernieten einer Gehäuse-KolbenBaugruppe;
- Fig. 5: eine Darstellung des Verfahrensablaufs beim Vernieten einer Gehäuse-Kolben-Baugruppe unter Verwendung einer Hilfsvorrichtung gemäß Fig. 4;
- Fig. 6a, 6b und 6c: verschiedene Ausbildungsformen und Konfigurationen flexibler Halteelemente eines erfindungsgemäßen Abstützelements;
- Fig. 7a und 7b: eine Ansicht von oben und eine seitliche Schnittansicht einer weiteren Ausbildungsform einer Hilfsvorrichtung zum Vernieten;
- Fig. 8: eine seitliche Schnittansicht einer weiteren Ausbildungsform einer Hilfsvorrichtung zum Vernieten;
- Fig. 9: ein flexibles Halteelement mit an einem Ende angebrachtem Ambossabschnitt, insbesondere zum Einsatz in einer Hilfsvorrichtung nach Fig. 8;
- Fig. 10: eine alternative Ausbildungsform eines flexiblen Halteelements.

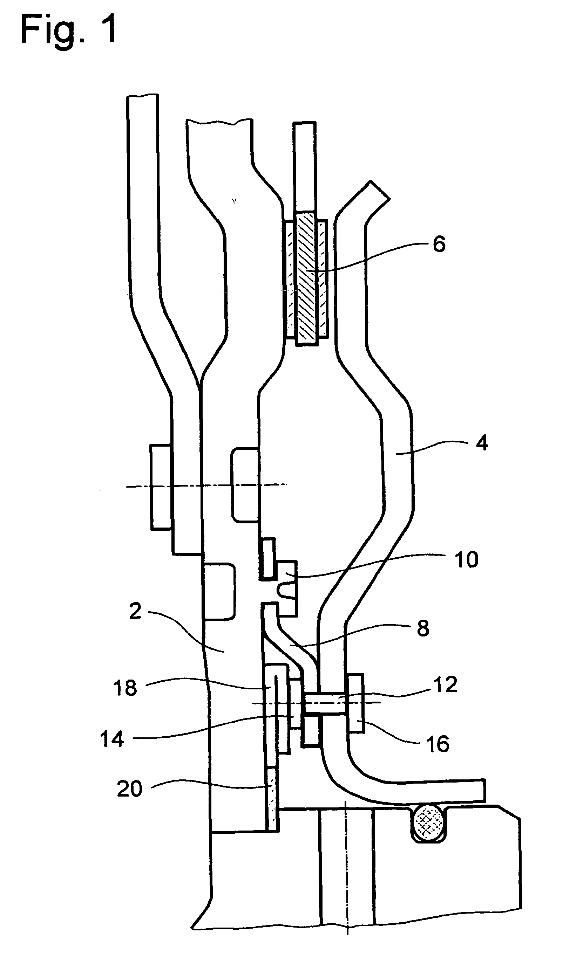

Fig. 1 zeigt einen Ausschnitt aus einer Gehäuse-Kolben-Baugruppe, umfassend einen Gehäusedeckel 2, der Teil eines Gehäuses einer Kopplungseinrichtung, beispielsweise einer nasslaufenden Lamellenkupplung oder einer Überbrückungskupplung einer hydrodynamischen Kopplungseinrichtung ist, sowie einen Kolben 4, der durch Bewegung in axialer Richtung, also in Richtung auf den Gehäusedeckel 2 hin oder von diesem weg, mit einer Kupplungslamelle 6 in Eingriff gebracht werden kann und diese gegen den Gehäusedeckel 2 drückt, um eine kraftschlüssige Verbindung zwischen dem Gehäusedeckel 2 und der Kupplungslamelle 6 herzustellen. Der Kolben 4 ist über Kopplungselemente 8, die beispielsweise als Blattfedern ausgebildet sind, mit dem Gehäusedeckel 2 verbunden, wobei die Kopplungselemente 8 mittels Nieten 10 am Gehäusedeckel 2 befestigt sind. Die Niete 10 sind im vorliegenden Beispiel direkt am Gehäusedeckel 2 angeformt. Der Kolben 4 wiederum ist an den Kopplungselementen 8 mittels Nieten 12 befestigt, deren Setzköpfe 14 zum Gehäusedeckel 2 hin zeigen und deren Schließköpfe 16 in den frei zugänglichen Innenraum vor dem Kolben 4 zeigen. Zwischen den Setzköpfen 14 der Niete 12 und dem Gehäusedeckel 2 befinden sich Ambossabschnitte 18 eines Abstützelements 20. Dieses Abstützelement 20 besteht im gezeigten Beispiel aus einem dünnen Material, beispielsweise aus Blech, wobei das Material in den Ambossabschnitten 18 doppelt liegt, um die notwendige Dicke zur Überbrückung des Abstands zwischen Gehäusedeckel 2 und den Setzköpfen 14 der Nieten 12 zu erzielen. Je nach Materialdicke bzw. zu überbrückendem Abstand kann natürlich auch eine Mehrfachfaltung vorgesehen sein, oder es können die Ambossabschnitte beispielsweise als separate Klötzchen am Abstützelement 20 angeordnet sein.

Bei der Montage der gezeigten Gehäuse-Kolben-Baugruppe werden nun zunächst die Kopplungselemente 8 auf die angeformten Niete 10 am Gehäusedeckel 2 aufgelegt und mit diesen vernietet, wobei ggf. auch die Niete 12 zur Verbindung der Kopplungselemente 8 mit dem Kolben 4 sowie das Abstützelement 20 bereits eingelegt sein können. Nach dem Vernieten der Kopplungselemente 8 mit dem Gehäusedeckel 2 wird der Kolben 4 auf die Kopplungselemente 8 und die entsprechenden Niete 12 aufgelegt, wobei spätestens jetzt auch das Abstützelement 20 in die Vernietungsposition gebracht werden muss, in der die Ambossabschnitte 18 unter den Setzköpfen 14 der Niete 12 zu liegen kommen. Dann findet die Vernietung des Kolbens 4 mit den Kopplungselementen 8 statt, wobei ein entsprechendes Werkzeug auf die Schließköpfe 16 der Niete 12 einwirkt, deren Setzköpfe 14 sich an den Ambossabschnitten 18 des Abstützelements 20 abstützen. Nach der erfolgten Vernietung wird das Abstützelement 20 aus der Vernietungsposition herausbewegt, entweder indem es aus der Gehäuse-Kolben-Baugruppe entfernt wird oder indem es in eine Freigabeposition verschoben oder vorzugsweise verdreht wird, wobei es in dieser Freigabeposition vorzugsweise auch fixiert wird.

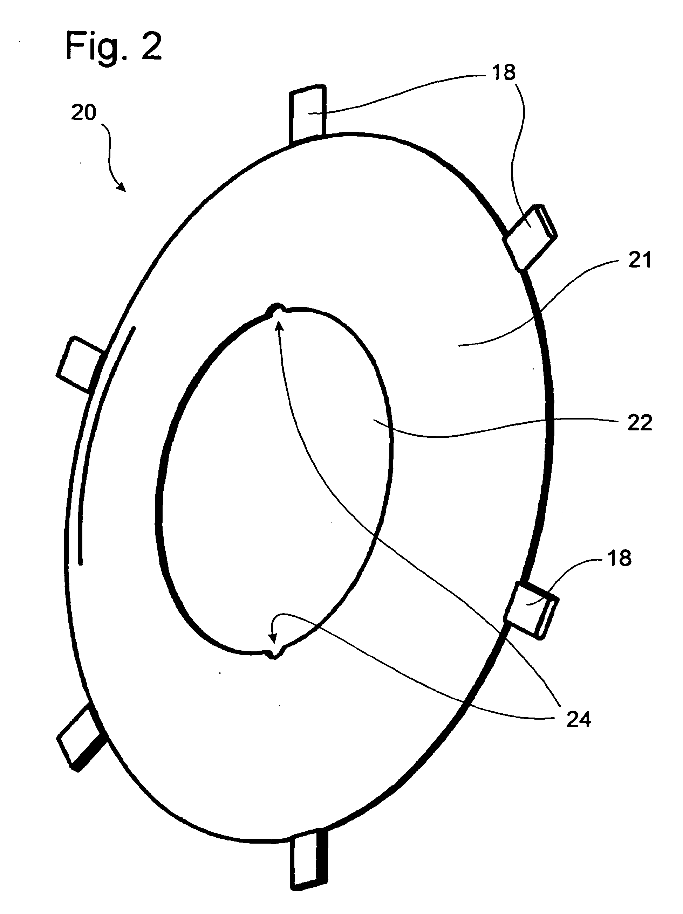

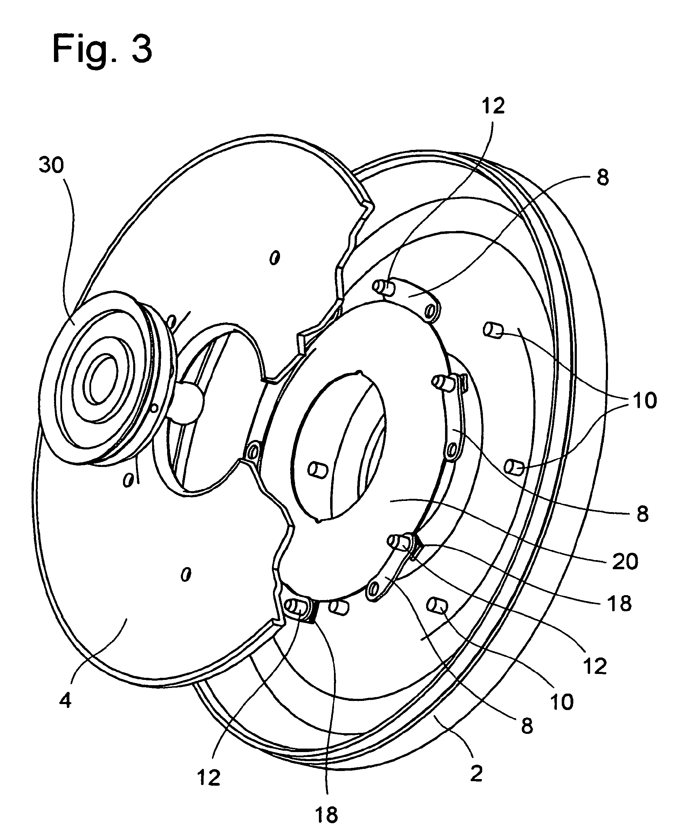

Fig. 2 zeigt eine Ausbildungsform eines Abstützelements 20, das hier als ringförmiges Hilfsblech 20 ausgebildet ist, umfassend einen Stützring 21, an dessen äußerem Umfang sich mehrere radial hervorstehende Ambossabschnitte 18 befinden. Diese Ambossabschnitte 18 sind ähnlich wie die Ambossabschnitte 18 des in Fig. 1 gezeigten Abstützelements 20 in etwa der doppelten Materialstärke des Stützrings 21 ausgebildet. Durch die ringförmige Gestaltung des Hilfsblechs 20 ergibt sich in dessen Inneren eine Öffnung 22, durch die hindurch bei der weiteren Montage beispielsweise eine Deckelnabe in den Gehäusedeckel 2 eingesetzt werden kann (siehe Fig. 3). Am inneren Rand zur Öffnung 22 hin weist das Hilfsblech 20 zwei Einkerbungen 24 auf, die als Angriffselemente zur Verdrehung des Hilfsblechs 20 aus der Vernietungsposition in die Freigabeposition dienen können. Diese Verdrehung kann entweder durch ein Werkzeug vorgenommen werden oder wie unten stehend noch näher erläutert wird, durch eine ggf. einzusetzende Deckelnabe.

Alternativ zu der in Fig. 2 gezeigten Ausbildungsform eines Abstützelements 20 als ringförmiges Hilfsblech 20 könnte das Abstützelement aber auch beispielsweise sternförmig ausgebildet sein, wobei die Ambossabschnitte 18 an den freien Endbereichen des Sterns angeordnet wären. Diese sternförmige Struktur kann beispielsweise auch in Form eines Netzes oder als Stern aus Kettchen, Schnüren oder dergleichen ausgebildet sein, wobei jeweils an den Enden der Kettchen bzw. Schnüre entsprechende Ambossabschnitte vorzusehen sind. Durch die Verwendung flexibler Bestandteile im Abstützelement kann dies nach dem Vernieten wieder aus der Gehäuse-Kolben-Baugruppe herausgezogen werden. Dies kann insbesondere vorgesehen werden, wenn zuerst eine Verbindung des Kolbens 4 mit den Kopplungselementen 8 vorgesehen ist oder die Kopplungselemente fest am Kolben angeformt sind und dann erst die Kopplungselemente 8 mit dem Gehäusedeckel 2 vernietet werden. In diesem Fall müssen die Ambossabschnitte 18 zwischen den Nieten 10 zur Verbindung des Gehäusedeckels 2 mit den Kopplungselementen 8 und dem Kolben 4 angeordnet werden. Das Abstützelement 20 kann dann in der Regel nicht in der Gehäuse-Kolben-Baugruppe verbleiben.

Fig. 3 zeigt eine dreidimensionale Explosionsansicht einer Ausbildungsform einer Gehäuse-Kolben-Baugruppe. Es ist dargestellt ein Gehäusedeckel 2, der später beispielsweise das Gehäuse eines Drehmomentwandlers oder einer ähnlichen Kopplungseinrichtung abschließen kann. An dem Gehäusedeckel 2 ist eine Anzahl Niete 10 vorgesehen, die hier beispielsweise direkt an dem Gehäusedeckel 2 angeformt sein können. Zur Verbindung des Gehäusedeckels 2 mit dem Kolben 4 dient eine Vielzahl von blattfederartigen streifenförmigen Kopplungselementen 8, die an ihren Enden Löcher aufweisen, durch das der jeweilige Niet 10 bzw. 12 hindurchgreifen kann. Ein Abstützelement in Form eines ringförmigen Hilfsblechs 20 aus Fig. 2 ist so angeordnet, dass die Ambossabschnitte 18 hinter den Setzköpfen der Niete 12 zu liegen kommen.

Bei der Montage werden nun zunächst die Kopplungselemente 8 mittels der Niete 10 am Gehäusedeckel 2 befestigt, wobei schon bei diesem Arbeitsvorgang das Hilfsblech 20 eingelegt sein kann. Sodann wird der Kolben 4 aufgelegt und mittels der Niete 12 an den Kopplungselementen 8 befestigt, wobei die Schließköpfe der Niete 12 auf der freien Seite des Kolbens 4 zugänglich sind, während die Setzköpfe der Niete 12 sich jeweils auf einem Ambossabschnitte 18 des Hilfsblechs 20 abstützen.

Nach der Montage des Kolbens 4 wird die Deckelnabe 30 eingesetzt. Diese Deckelnabe 30 kann vorzugsweise mit Vorsprüngen oder dergleichen ausgestattet sein, die in die Aussparungen 24 am inneren Umfangsrand des ringförmigen Hilfsblechs 20 eingreifen können. Wenn nach dem Einsetzen der Deckelnabe 30 diese verdreht wird, wird das Hilfsblech 20 ebenfalls in der Drehung mitgenommen, so dass die Ambossabschnitte 18 aus dem Bereich der Niete 12 und der Kopplungselemente 8 verschwenkt werden, wodurch der Kolben 4 nun frei in in axialer Richtung, also auf den Gehäusedeckel 2 zu, beweglich ist. Das Hilfsblech 20 nimmt somit nun eine Freigabeposition ein. Schließlich kann die Deckelnabe 30 von außen her mit dem Gehäusedeckel 2 verschweißt werden, wodurch das Hilfsblech 20 ggf. mit verschweißt wird, jedoch auf jeden Fall von der verschweißten Deckelnabe 30 in der Freigabeposition fixiert wird und so gegen Rotation und axiale Bewegung gesichert ist.

Sofern keine Deckelnabe vorgesehen ist, kann mittels einer Hilfsvorrichtung, die in den Innendurchmesser des Kolbens 4 gesteckt wird, das Hilfsblech 20 so verdreht werden, dass wiederum die Ambossabschnitte 18 aus dem Bewegungsbereich der Kopplungselemente 8 geschwenkt werden und so den Kolbenhub in Richtung des Gehäusedeckels 2 nicht mehr behindern, womit das Hilfsblech 20 eine Freigabeposition einnimmt. Nach der Entfernung der Hilfsvorrichtung wird das in der Gehäuse-Kolben-Baugruppe verbleibende Hilfsblech 20 im durch die Innenbohrung des Kolbens 4 zugänglichen Bereich im Gehäusedeckel 2 fixiert, beispielsweise durch Bördeln, Heften oder Vernieten.

In jedem Fall kann durch eine entsprechende Gestaltung des Kolbens 4 oder Gehäusedeckels 2 die Verdrehbarkeit des Hilfsblechs 20 für den Arbeitsschritt des Verdrehens nach dem Vernieten geeignet begrenzt werden, so dass eine falsche Winkellage des Hilfsblechs 20 nach dem Fixieren nicht auftreten kann. Gegebenenfalls kann auch eine Einrastung bzw. ein Einschnappen des Hilfsblechs 20 oder einer eventuellen Deckelnabe 30 am Gehäusedeckel 2 oder am Kolben 4 vorgesehen werden, so dass das Hilfsblech 20 nur bis zur richtigen Stellung verdreht werden kann und dann in der Winkellage, die der Freigabeposition entspricht, fixiert bleibt. Diese Maßnahmen zur Verdrehsicherung können natürlich unabhängig von der konkreten Ausgestaltung des Abstützelements vorgesehen werden, und können analog auch angewandt werden, falls das Abstützelement nicht durch Rotation, sondern durch eine andere Bewegung aus der Vernietungsposition in die Freigabeposition überführt wird.

In einer alternativen, nicht in den Figuren dargestellten Ausbildungsform kann der Gehäusedeckel 2 Bohrungen anstelle von angeformten Nieten 10 aufweisen. Der Kolben 4 kann durch ein Federblech mit Zungen, welches die Funktion der Kopplungselemente 8 erfüllt, oder durch eine andere Ausbildungsform der Kopplungselemente am Gehäusedeckel 2 gehalten werden. Anstelle eines in der Gehäuse-Kolben-Baugruppe verbleibenden Hilfsblechs 20 kann hier ein entfernbares flexibles Hilfsmittel eingesetzt werden, das beispielsweise ein dünner Blechstern, ein Netz oder ein Stern aus Kettchen sein kann, der eine der Anzahl der Niete entsprechende Anzahl an Verdickungen oder aufgesetzter Scheiben als Ambosselemente zum Unterfüttern zwischen den Nieten und dem Kolben 4 aufweist.

Bei der Montage wird zunächst das Federblech an der dem Gehäusedeckel 2 zugewandten Seite mit Nieten am Kolben 4 befestigt. Gegebenenfalls müssen hier schon die Niete für die Vernietung des Federblechs mit dem Gehäusedeckel 2 bestückt sein, wobei deren Setzkopf diesmal in Richtung Kolben 4 weist, beispielsweise wenn es aus Platzgründen erforderlich ist. Ebenso liegt das entfernbare Hilfsmittel schon mit den Ambosselementen, also beispielsweise den Scheiben, zwischen den Setzköpfen der Niete und dem Kolben. Diese vormontierte Einheit wird nun in den Gehäusedeckel 2 eingelegt, so dass die Niete durch die Bohrungen im Gehäusedeckel 2 ragen. Dann werden die Niete von außen am Gehäusedeckel mit Gegendruck auf den Kolben 4 vernietet. Anschließend wird das Hilfsmittel durch die Innenbohrung des Kolbens 4 wieder entfernt. In diesem Fall werden die Löcher im Gehäusedeckel durch die Niete verschlossen; im Gegensatz zum genannten Stand der Technik sind keine Zugangslöcher im Kolben 4 erforderlich.

Selbstverständlich kann auch in der in Fig. 3 gezeigten Ausbildungsform ein anderes Abstützelement als das dargestellte Hilfsblech 20 verwendet werden, welches entfernbar sein kann oder auch in der Gehäuse-Kolben-Baugruppe verbleiben kann. Auch ist die dargestellte Bauform der Gehäuse-Kolben-Baugruppe nicht zwingend; insbesondere können auch die Kopplungselemente zwischen Kolben 4 und Gehäusedeckel 2 in anderer Form ausgebildet sein.

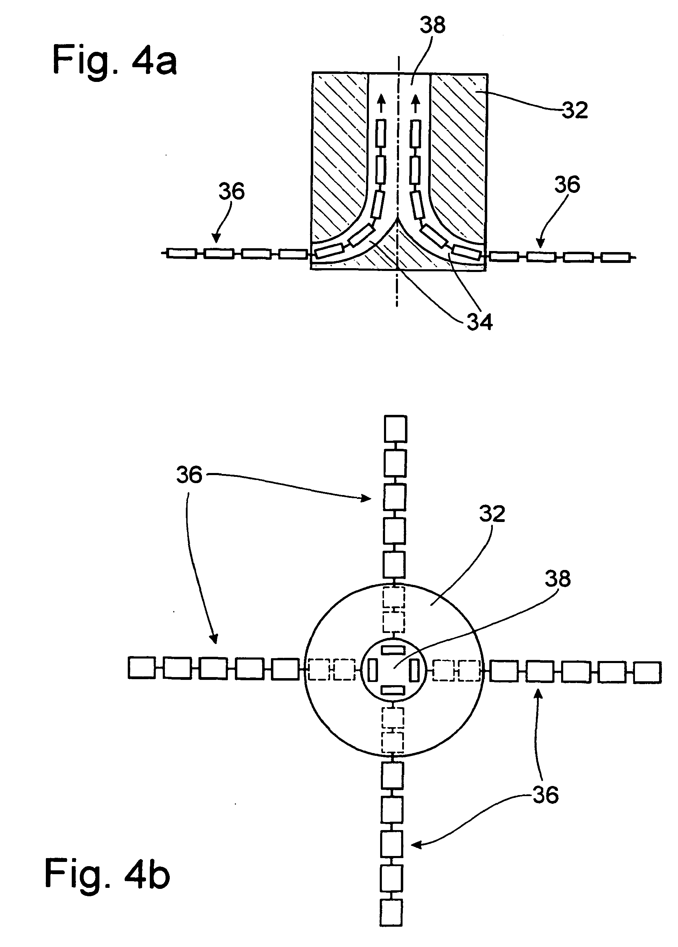

Fig. 4a und 4b zeigen in seitlicher Schnittansicht und in Draufsicht eine Hilfsvorrichtung zum Vernieten einer Gehäuse-Kolben-Baugruppe. Diese Hilfsvorrichtung umfasst einen im Wesentlichen zylindrischen Grundkörper 32 mit darin eingeformten Führungsbahnen 34 für flexible Halteelemente 36. Diese Führungsbahnen 34 treten nahe einem Ende des Grundkörpers 32 in radialer Richtung aus diesem aus und verlaufen von dieser Austrittsöffnung bogenförmig auf das Zentrum des Grundkörpers 32 zu, wo sie in eine axiale Bohrung 38 münden, die sich zu der Seite des Grundkörpers 32 öffnet, die der Seite gegenüber liegt, an der die Führungsbahnen 34 austreten. An den Enden der Halteelemente 36, die auf der Seite der Austritte der Führungsbahnen 34 nach außen gelangen, sind Ambossabschnitte ausgebildet, die zur Vernietung unter die Setzköpfe 14 der Niete 12 (s. Fig. 1 und 3) positioniert werden können. Diese Ambossabschnitte können als separate Elemente an den Enden der Halteelemente 36 angefügt sein. Es kann aber auch das jeweils letzte Element der Halteelemente 36 als Ambossabschnitt, d.h. insbesondere mit der erforderlichen Dicke und Festigkeit, ausgebildet sein.

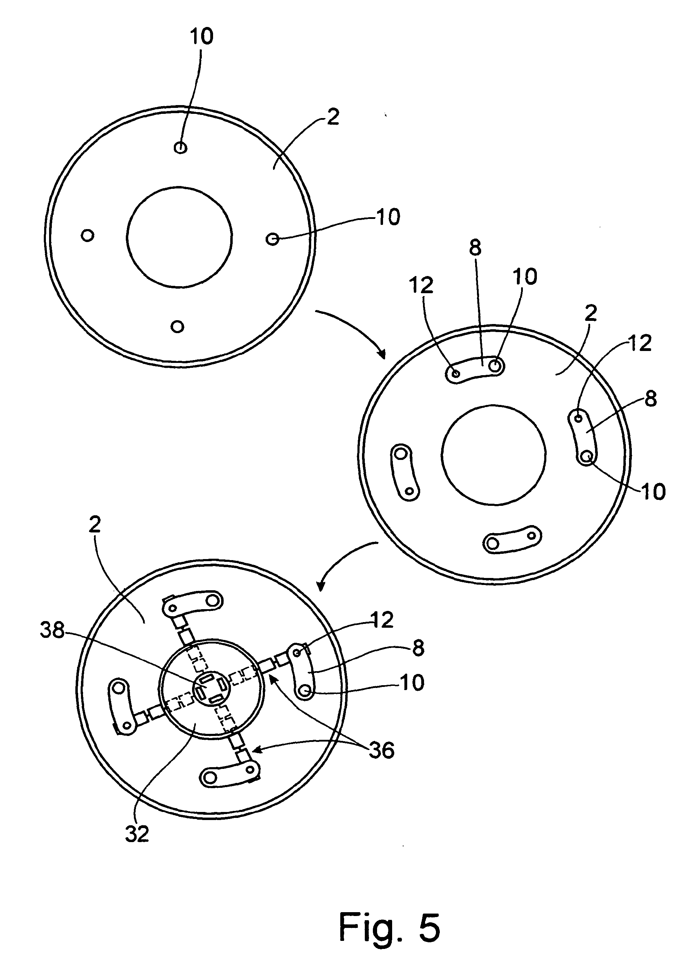

Fig. 5 zeigt den Verfahrensablauf beim Vernieten einer Gehäuse-Kolben-Baugruppe. Dabei sind Elemente, die Elementen aus den Fig. 1 bis 4 entsprechen, mit gleichen Bezugszeichen gekennzeichnet. Der dargestellte Gehäusedeckel 2 mit den darauf vorgesehenen Nieten 10 entspricht im Wesentlichen dem in Fig. 3 dargestellten Gehäusedeckel 2. Es werden nun zunächst die Kopplungselemente 8, die hier blattfederartig ausgebildet sind, mit in ihnen vorgesehenen Löchern auf die Niete 10 aufgesetzt und mit dem Gehäusedeckel 2 vernietet. Sodann wird die in Fig. 4 dargestellte Hilfsvorrichtung auf den Gehäusedeckel 2 so aufgesetzt, dass das untere Ende des Grundkörpers 32 in die für die spätere Aufnahme der Deckelnabe vorgesehene Öffnung im Gehäusedeckel 2 eingesetzt wird. Dadurch wird eine Zentrierung und korrekte Positionierung der Hilfsvorrichtung am Gehäusedeckel gewährleistet. Die flexiblen Halteelemente 36 werden nun so über den Gehäusedeckel 2 geführt, dass die an ihren Enden befindlichen Ambossabschnitte hinter den Setzköpfen der Niete 12 zur Vernietung der Kopplungselemente 8 mit dem (hier nicht dargestellten) Kolben 4 zu liegen kommen. Dabei kann es insbesondere vorgesehen sein, dass die Niete 12 bereits vor der Positionierung der flexiblen Halteelemente 36 an den Kopplungselementen 8 angeordnet sind. Dazu können die Niete 12 entweder an den Kopplungselementen 8 angeformt sein oder durch eine entsprechende Bohrung in den Kopplungselementen 8 durchgesteckt sein. In diesem Fall sind die Niete 12 vorzugsweise in der Bohrung geklemmt, beispielsweise durch eine Presspassung.

Alternativ kann der Verfahrensablauf aber auch so sein, dass die Hilfsvorrichtung bereits vor dem Vernieten der Niete 10 zwischen den Kopplungselementen 8 und dem Gehäusedeckel 2 eingesetzt wird und die flexiblen Halteelemente 36 mit den daran angebrachten Ambossabschnitten in die Vernietungsposition gebracht werden. Dann werden die Kopplungselemente 8 mit den Nieten 12 auf die Niete 10 aufgesteckt, so dass die Setzköpfe der Niete 12 auf den Ambossabschnitten der flexiblen Halteelemente 36 zum Liegen kommen, worauf nun zunächst die Vernietung der Niete 10 erfolgt.

In jedem Fall wird nach der Positionierung der Halteelemente 36 und der Vernietung der Niete 10 der (nicht dargestellte) Kolben 4 aufgesetzt. Dazu wird der Kolben 4 über den Grundkörper 32 der Hilfsvorrichtung gestülpt und durch diesen zentriert. Durch eine entsprechende Rotation kann der Kolben 4 nun mit den vorgesehenen Löchern zur Deckung mit den Nieten 12 gebracht werden. Daraufhin findet die Vernietung der Niete 12, also die Fixierung des Kolbens 4 an den Kopplungselementen 8 statt.

Nach der Vernietung werden die flexiblen Halteelemente 36 von oben her durch die zentrale Bohrung 38 im Grundkörper 32 der Hilfsvorrichtung herausgezogen, so dass der Kolben nun in axialer Richtung der Gehäuse-Kolben-Baugruppe gestützt durch die Kopplungselemente 8 beweglich ist. Wenn die flexiblen Halteelemente 36 vollständig aus dem Bereich des Kolbens herausgezogen sind, kann die Hilfsvorrichtung entnommen werden. Damit ist der Nietvorgang abgeschlossen.

Bei einem alternativen Verfahrensablauf können die Kopplungselemente 8 mittels der Niete 12 am Kolben 4 vormontiert sein, so dass in einem zweiten Schritt eine Vernietung der Kopplungselemente 8 mit dem Gehäusedeckel 2 mittels der Niete 10 erfolgen muss. Dazu werden die Niete 10 durch entsprechende Bohrungen an den Kopplungselementen 8 durchgesteckt oder sind bereits an den Kopplungselementen 8 vorgesehen und greifen durch Bohrungen im Gehäusedeckel 2 hindurch, so dass sie von der Außenseite des Gehäusedeckels 2 her vernietet werden können. Die Setzköpfe der Niete 10 weisen somit in Richtung auf den Kolben 4. Es kann dann die Hilfsvorrichtung mit ihrem Grundkörper 32 in die zentrale Bohrung des Kolbens 4 eingesetzt werden, und es können die flexiblen Halteelemente 36 so verlagert werden, dass die Ambossabschnitt hinter den Setzköpfen der Niete 10, d. h. zwischen den Kopplungselementen 8 und dem Kolben 4 zu liegen kommen. Die so abgestützten Niete 10 können dann von der Außenseite des Gehäusedeckels 2 her vernietet werden.

Falls erwünscht oder erforderlich, kann eine automatische, beispielsweise visuelle, Inspektion der Vernietung erfolgen. Bei den je nach Vorgehensweise zuerst vernieteten Nieten, z. B. im Falle der Niete 10, die den Gehäusedeckel 2 und die Kopplungselemente 8 verbinden, erfolgt diese Inspektion vorzugsweise bereits vor dem Aufsetzen des Kolbens 4. Nach dem zweiten Vernietungsschritt, z. B. der Vernietung des Kolbens 4 mit den Kopplungselementen 8 über die Niete 12, kann dann eine Inspektion dieser Vernietungen erfolgen.

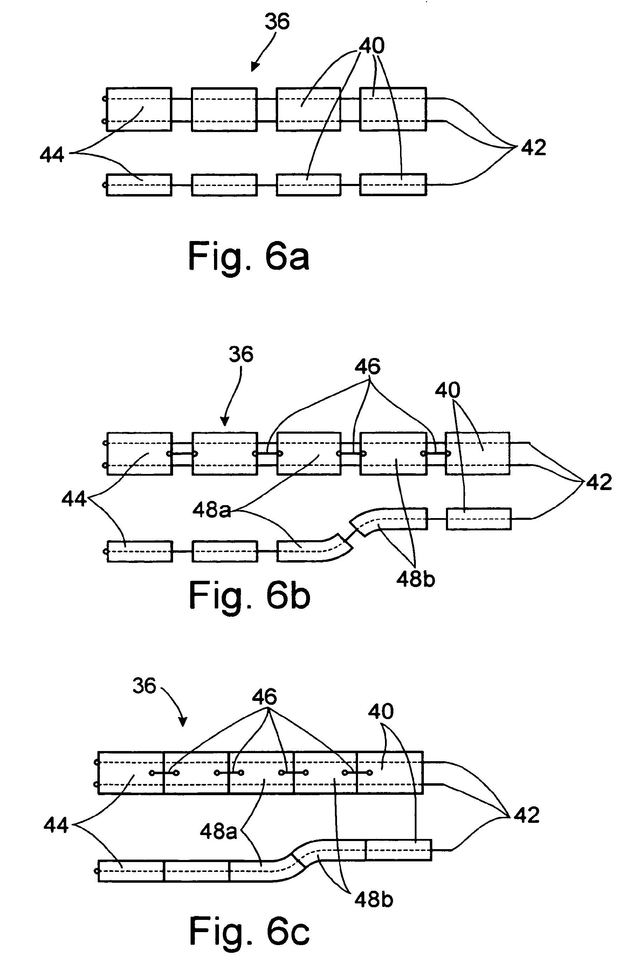

Fig. 6a zeigt in Draufsicht und Seitenansicht eine Ausbildungsform eines flexiblen Halteelements 36, das beispielsweise in einer Hilfsvorrichtung aus Fig. 4 eingesetzt werden kann. Dieses Halteelement 36 besteht aus einer Reihe von einzelnen Elementen oder Kettengliedern, die hier beispielsweise Plättchen 40 aus Kunststoff, Metall oder dergleichen sind. Die Plättchen 40 sind durch zwei Fäden oder Drähte 42, die durch entsprechende Bohrungen in den Plättchen verlaufen, miteinander verbunden. Die Fäden oder Drähte 42 sind mit dem Endplättchen 44 gekoppelt, so dass ein Verschieben des Endplättchens 44 über das Ende der Fäden oder Drähte 42 hinaus nicht möglich ist. Das Endplättchen 44 dient hier auch gleichzeitig als Ambossabschnitt zum Vernieten. Dazu ist das Endplättchen 44 vorzugsweise in seiner Dicke und Materialbeschaffenheit entsprechend auszugestalten.

Die Plättchen 40 sind grundsätzlich entlang der Fäden oder Drähte 42 verschiebbar angeordnet, so dass sie im Regelfall höchstens locker aneinander liegen und damit relativ zueinander beweglich sind, um eine Flexibilität des Halteelements 36 zu ermöglichen. Werden nun die Plättchen 40 von dem dem Endplättchen 44 entgegengesetzten Ende der Fäden oder Drähte 42 her zusammengeschoben, so kommen ihre Stirnflächen aneinander zu liegen und die Flexibilität des Halteelements 36 nimmt abhängig von der aufgebrachten Kraft ab. Auf diese Weise kann das Halteelement 36 in einen unflexiblen Zustand zum Vernieten gebracht werden, um eine möglichst sichere Beibehaltung der Position des als Ambossabschnitt dienenden Endplättchens 44 beizubehalten.

Fig. 6b zeigt ebenfalls in Draufsicht und Seitenansicht eine alternative Ausbildungsform eines flexiblen Halteelements 36. Der grundsätzliche Aufbau des Halteelements 36 aus Fig. 6b entspricht dem des flexiblen Halteelements 36 aus Fig. 6a. Die Plättchen 40 sind aber zusätzlich mit Kopplungselementen 46, die hier beispielsweise Fäden oder Drähte sein können, zwischen jeweils zwei Plättchen gekoppelt. Weiterhin sind zwei herausgehobene Plättchen 48a, 48b im mittleren Bereich des Halteelements 36 gegenläufig zueinander verbogen. Auf diese Weise kann das Halteelement 36 auch in einem unflexiblen Zustand (s. Fig. 6c) eine Stufe überwinden, die beispielsweise an den Austritten der Führungsbahnen 34 der in Fig. 4 gezeigten Hilfsvorrichtung entsteht. In dem in Fig. 6b gezeigten Zustand weisen die einzelnen Plättchen 40, 48a, 48b einen gewissen Abstand zueinander auf, d.h. sie liegen locker entlang der Fäden oder Drähte 42, so dass das Halteelement 36 hier einen flexiblen Zustand einnimmt.

Fig. 6c zeigt in Draufsicht und Seitenansicht das flexible Halteelement 36 aus Fig. 6b, nun jedoch in einen unflexiblen Zustand überführt. Dazu werden die Plättchen 40, 48a, 48b so entlang der Fäden oder Drähte 43 bewegt, dass ihre jeweiligen Stirnflächen aneinander stoßen und die freie Beweglichkeit der Plättchen 40, 48a, 48b zueinander abhängig von der aufgebrachten Kraft eingeschränkt wird. Dazu können entweder die Plättchen 40 von dem Ende des Halteelements 36 aus, das dem Endplättchen 44 entgegengesetzt ist, zusammengeschoben werden, oder es kann das an diesem Ende befindliche Plättchen 40 festgehalten werden und an den Fäden oder Drähten gezogen werden. Wie insbesondere in der Seitenansicht in Fig. 6c deutlich wird, erzeugen vor allem in dem hier dargestellten unflexiblen Zustand die gebogenen Elemente 48a, 48b eine Stufe im Halteelement 36, mit der eine entsprechende, bereits oben erläuterte Stufe überwunden werden kann. Abhängig von der konkreten Geometrie der zu vernietenden Gehäuse-Kolben-Baugruppe und/oder der verwendeten Hilfsvorrichtung können natürlich auch verschiedene Formen vorgesehen werden, um auch Stufen verschiedener Höhe, mehrere Stufen, Rundungen, etc. überwinden zu können.

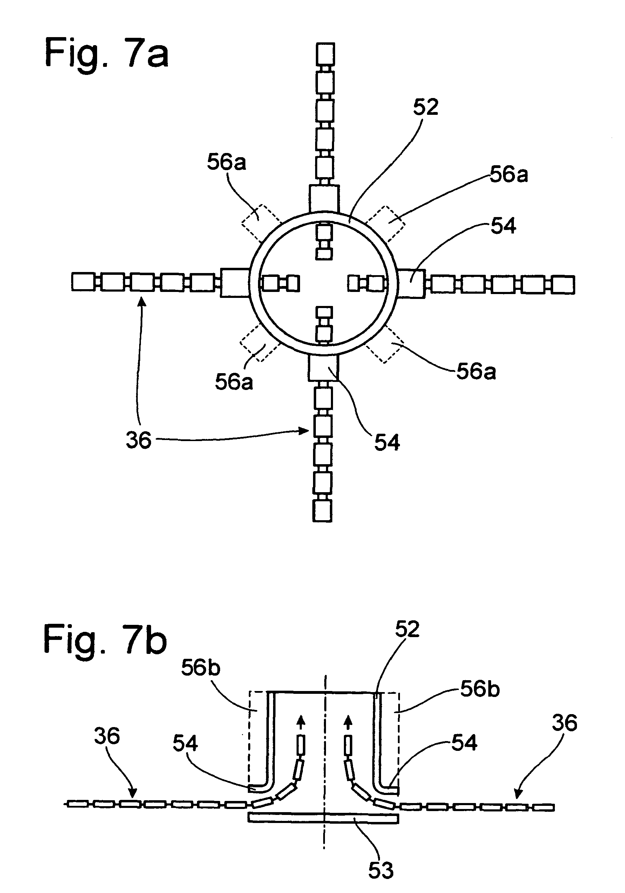

Fig. 7a und 7b zeigen in Draufsicht und seitlicher Schnittansicht eine zu der in den Fig. 4a und 4b dargestellten alternative Ausbildungsform einer Hilfsvorrichtung zum Vernieten. Die hier gezeigte Hilfsvorrichtung umfasst wiederum einen hohlzylindrischen Grundkörper 52, dessen eine Seite mit einer Bodenplatte 53 abgeschlossen ist. An dem mit der Bodenplatte 53 abgeschlossenen Ende befinden sich eine Mehrzahl von Führungshülsen 54, die zum Inneren des Grundkörpers 52 und in radialer Richtung nach außen hin offen sind. Durch die Führungshülsen 54 hindurch können flexible Halteelemente 36, ähnlich wie zu den Fig. 4a und 4b erläutert, durchgeführt werden.

Der grundsätzliche Einsatz der dargestellten Hilfsvorrichtung entspricht dem mit Bezug zur Fig. 5 beschriebenen der Hilfsvorrichtung aus Fig. 4. Allerdings ist hier zu beachten, dass in dem Fall, dass der zu vernietende Kolben so auf den Grundkörper 52 aufgesetzt wird, dass er von diesem geführt wird, eine Entnahme der Hilfsvorrichtung nach dem Vernieten nur noch auf der Seite des Gehäusedeckels 2, die weg vom Kolben 4 weist, möglich ist. Damit muss auch der Durchmesser der Hilfsvorrichtung einschließlich der Führungshülsen 54 auf die Öffnung im Gehäusedeckel abgestimmt sein. Eine Alternative wäre es, am Grundkörper 52 weitere Führungselemente vorzusehen, die dem Durchmesser des Grundkörpers entsprechend erweitern und an denen sich der Kolben abstützen kann, beispielsweise in Form der in den Fig. 7a und 7b gestrichelt dargestellten Distanzelemente 56a, 56b.

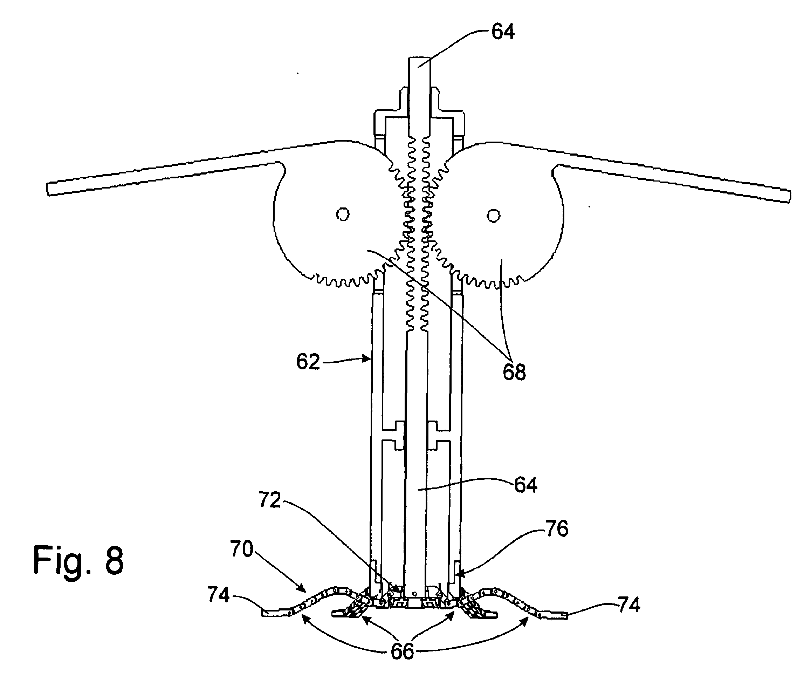

Fig. 8 zeigt in seitlicher Schnittansicht eine weitere Ausbildungsform einer Hilfsvorrichtung zum Vernieten. Diese besteht aus einem zylindrischen Grundkörper 62, in dem in axialer Richtung verschiebbar gelagert eine Zug- und Schubstange 64 vorgesehen ist. Diese Zug- und Schubstange 64 ist in ihrem oberen Teil mit einer Verzahnung versehen, in die eine entsprechende Gegenverzahnung zweier beweglich am Grundkörper 62 gelagerter Hebelelemente 68 eingreift. Durch Betätigung der Hebelelemente 68 kann die Zug- und Schubstange 64 in axialer Richtung in dem Grundkörper 62 verlagert werden.

Am unteren Ende der Zug- und Schubstange 64 ist angekoppelt ein Abstützelement 70 zur Vernietung. Dieses weist einen zentralen Ringkörper 72 auf, der mit der Zug- und Schubstange 64 gekoppelt ist oder gekoppelt werden kann und an dem mehrere flexible Halteelemente 66 beweglich angeordnet sind. Am Ende der beweglichen Halteelemente 66 befinden sich wieder Ambossabschnitte 74, die zum Vernieten hinter die Setzköpfe der entsprechenden Niete verbracht werden können. Durch eine Aufwärtsbewegung der Zug- und Schubstange 64 werden nun die flexiblen Halteelemente 66 in das Innere des Grundkörpers 62 hineingezogen, wogegen sie durch eine entsprechende Abwärtsbewegung der Zug- und Schubstange 64 aus diesem Grundkörper 62 herausgeschoben werden. Dazu weist der Grundkörper 62 an seinem unteren Ende Öffnungen für die Durchführung der flexiblen Halteelemente 66 auf. Am Rand dieser Öffnungen sind Führungselemente 76 vorgesehen, die die flexiblen Halteelemente 66 insbesondere so führen sollen, dass sie nicht in unerwünschter Weise mit Bauelementen der zu vernietenden Gehäuse-Kolben-Baugruppe kollidieren.

Der Verfahrensablauf beim Vernieten mit der in Fig. 8 gezeigten Ausrichtung weicht von dem mit Bezug auf Fig. 5 dargestellten insofern ab, als der Kolben aufgrund der Hebelelemente 68 nicht von der Oberseite der Hilfsvorrichtung aufgesetzt werden kann. Es ist also vor der Vernietung des Kolbens mit den Kopplungselementen vorzugsweise bei eingezogenen Halteelementen 66 der Kolben von der Unterseite der Hilfsvorrichtung auf den Grundkörper 62 aufzuschieben. Dann wird die Hilfsvorrichtung mit dem aufgeschobenen Kolben auf den Gehäusedeckel aufgesetzt und dann werden durch Betätigung der Hebelelemente 68 die flexiblen Halteelemente 66 ausgefahren, so dass die Ambossabschnitte 74 hinter den entsprechenden Nieten zu liegen kommen. Nach der Vernietung des Kolbens mit den Kopplungselementen bzw. der Kopplungselemente mit dem Gehäusedeckel entsprechend den mit Bezug zu Fig. 5 beschriebenen Varianten des Verfahrensablaufs wird durch Betätigung der Hebelelemente 68 die Zug- und Schubstange 64 nach oben verschoben, so dass die flexiblen Halteelemente 66 und damit die Ambossabschnitte 74 in das Innere des Grundkörpers 62 gezogen werden, so dass die Hilfsvorrichtung entfernt werden kann.

Das Einführen der Halteelemente 66 mittels der Zug- und Schubstange 64 und Hebelelemente 68 bietet den Vorteil, dass eine reproduzierbare und genaue Positionierung der Ambossabschnitte 74 möglich ist, beispielsweise in dem eine Markierung, die die vorzusehende Position der Hebelelemente 68 oder der Zug- und Schubstange 64 anzeigt, vorgesehen wird. Falls nach dem Vernieten noch eine Klemmung der Ambossabschnitte 74 zwischen den Setzköpfen der Niete und dem Gehäusedeckel bestehen sollte, so kann dank der Hebelelemente 68 eine genügend große Kraft erzeugt werden, um die flexiblen Halteelemente 66 auf jeden Fall aus der Gehäusekolbenbaugruppe herauszuziehen und den Kolben freizugeben.

Bei der Hilfsvorrichtung gemäß Fig. 8 sind auf Grund des Vorhandenseins des Kolbens bereits beim Aufsetzen der Hilfsvorrichtung auf den Gehäusedeckel die flexiblen Halteelemente 66 nicht mehr sichtbar. Um sicherzustellen, dass die Ambossabschnitte 74 dennoch die richtige Position hinter den Setzköpfen der Niete einnehmen, können an der Hilfsvorrichtung Markierungen angebracht sein, die die Austrittsstellen der Halteelemente 66 aus dem Grundkörper 62 markieren, so dass diese beispielsweise mit den zur Vernietung vorgesehenen Löchern im Kolben oder entsprechenden Markierungen auf der Gehäuse-Kolben-Baugruppe in Übereinstimmung gebracht werden können.

Es kann weiter vorgesehen sein, dass die Halteelemente 66 unter einer Federvorspannung stehen, die die Halteelemente 66 in radialer Richtung vom Grundkörper 62 aus gesehen nach außen drückt. Somit bewegen sich die Halteelemente 66 beim Ausfahren aus dem Grundkörper 62 in radialer Richtung nach außen, d.h. in Richtung auf die Vernietungsposition zu.

Es ist darauf hinzuweisen, dass in allen Ausführungsformen einer Hilfsvorrichtung zum Vernieten die zur präzisen Vernietung erforderliche wechselseitige Zentrierung zwischen Gehäusedeckel und Kolben auf zwei Arten stattfinden kann. Entweder kann die Hilfsvorrichtung beim Aufsetzen auf den Gehäusedeckel an diesem zentriert werden, beispielsweise durch Vorsehen geeigneter Abstützelemente. Wenn der Kolben dann auch an der Hilfsvorrichtung zentriert ist, beispielsweise an deren Grundkörper 32, 52 oder 62 bzw. an entsprechenden Distanzelementen 56a oder 56b, ergibt sich automatisch eine korrekte Zentrierung zwischen Kolben und Gehäusedeckel. Der Kolben ist nur noch in die korrekte Position zu drehen, z. B. bis die vorgesehenen Löcher zur Deckung mit den Löchern in den Kopplungselementen bzw. mit den in diese Löcher eingesetzten oder an den Kopplungselementen vorgesehenen Nieten gelangen. Andererseits ist in dem Fall, dass die Hilfsvorrichtung am Gehäusedeckel zentriert ist, eine weitere Zentrierung des Kolbens an der Hilfsvorrichtung nicht unbedingt erforderlich, da der Kolben durch die bereits vorhandene feste Lage der Kopplungselemente mit den entsprechenden Nieten nur eine definierte Position einnehmen kann.

Es kann aber andererseits auch vorgesehen sein, dass die Hilfsvorrichtung zum Vernieten sich nicht am Gehäusedeckel abstützt oder an diesem zentriert ist. In diesem Fall kann eine indirekte Zentrierung dadurch stattfinden, dass der Kolben an der Hilfsvorrichtung, also wiederum beispielsweise an deren Grundkörper 32, 52 oder 62 oder an entsprechenden Distanzelementen 56a, 56b geführt und zentriert wird und die Hilfsvorrichtung in Relation zum Gehäusedeckel dadurch eine definierte Position einnimmt, dass der Kolben wie eben beschrieben in Relation zu den Kopplungselementen und den daran vorgesehenen Nieten eine vorgegebene Position einnehmen muss.

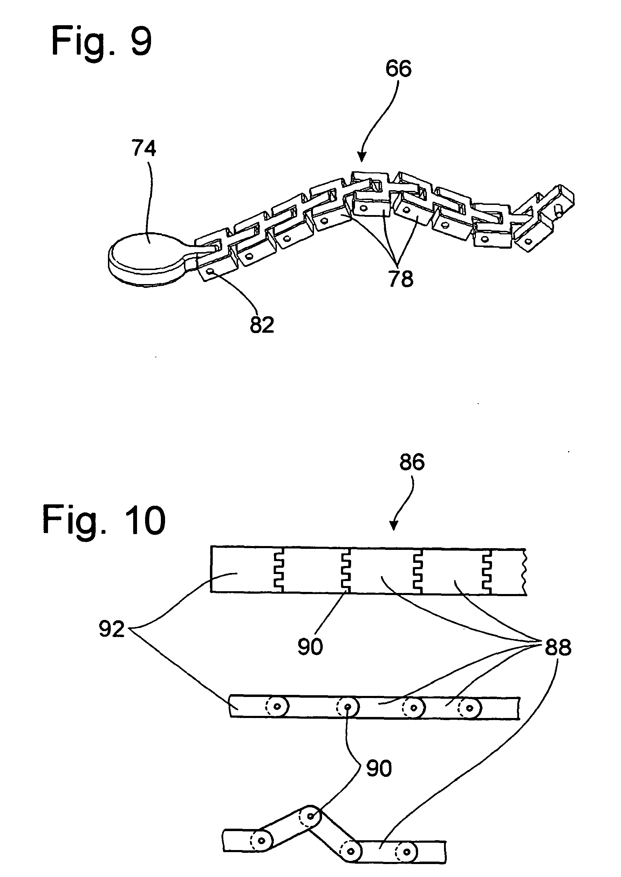

Fig. 9 zeigt ein flexibles Halteelement 66 aus der Hilfsvorrichtung aus Fig. 8.

Dieses Halteelement 66 besteht aus einer Vielzahl von gelenkig miteinander verbundenen Kettengliedern 78, wobei am Ende des Halteelements 66 ein plattenförmiger Ambossabschnitt 74 vorgesehen ist. Die Kettenglieder 78 sind in diesem Beispiel in Form einer zweizinkigen Gabel ausgebildet, wobei jeweils ein Gabelstiel eines Kettenglieds 78 zwischen die Zinken eines benachbarten Kettenglieds 78 eingeführt wird und dort mittels eines die Gabelzinken und den Gabelstiel durchsetzenden Bolzens 82 oder zweier vom Gabelstiel abstehender Bolzen 82 gehalten wird. Der Gabelstiel eines Kettenglieds 78 ist somit relativ zu den Gabelzinken des benachbarten Kettenglieds 78 rotatorisch mit einem Freiheitsgrad beweglich. Somit weist das hier dargestellte flexible Halteelement 66 eine Beweglichkeit nur in einer Richtung auf und ist in der anderen Richtung unflexibel. Bei der Verwendung in der in Fig. 8 dargestellten Hilfsvorrichtung kann das flexible Halteelement 66 somit aus dem Inneren des Grundkörpers 62 heraus um die Führungselemente 76 herum umgelenkt werden, um dann entlang des Gehäusedeckels in Richtung auf die Vernietungsposition verschoben zu werden. Durch die mangelnde Flexibilität in allen anderen Richtungen kann sichergestellt werden, dass beim Vortrieb des flexiblen Halteelements 66 die erwünschte Richtung beibehalten wird, so dass der Ambossabschnitt 74 mit guter Positioniergenauigkeit unter den entsprechenden Setzkopf des jeweiligen Niets zu liegen kommt.

Eine weitere Ausbildungsform eines flexiblen Halteelements 86 zeigt Fig. 10. Dieses besteht wieder aus mehreren Kettengliedern 88, die durch Scharniere 90 verbunden sind, so dass sich eine ähnliche Beweglichkeit wie bei dem in Fig. 9 dargestellten Halteelement 66 ergibt. In diesem Fall kann das letzte Kettenglied 92 wieder gleichzeitig als Ambossabschnitt dienen.

Es ist hervorzuheben, dass grundsätzlich alle in den Figuren dargestellten Halteelemente 36, 66 und 86 in jeder der gezeigten Hilfsvorrichtungen oder auch alleine zum Einsatz kommen könnten. Somit kann jedes Halteelement 36, 66 oder 86 ein Abstützelement im Sinne der vorliegenden Erfindung bilden. Es kann aber auch ein Abstützelement, z.B. das Abstützelement 70 aus Fig. 8, eines oder mehrere flexible Halteelemente umfassen. Dabei kann ein Einzelelement oder Kettenglied eines flexiblen Halteelements gleichzeitig als Ambossabschnitt dienen, oder es kann an einem flexiblen Halteelement ein separater Ambossabschnitt vorgesehen sein. Weiterhin sind die gezeigten flexiblen Halteelemente und Hilfsvorrichtungen lediglich exemplarisch zu verstehen. Der Fachmann wird ohne Weiteres feststellen, dass abhängig vom Anwendungsbereich und der konkreten Bauform der zu vernietenden Gehäuse-Kolben-Baugruppe eine Vielzahl an weiteren Varianten denkbar ist.

## Patentansprüche

1. Abstützelement (20, 36, 70, 86) zur Verwendung In einer Gehäuse-Kolben-Baugruppe für eine Kopplungseinrichtung, insbesondere eine nasslaufende Lamellenkupplung oder eine Überbrückungskupplung einer hydrodynamischen Kopplungseinrichtung, umfassend Ambossabschnitte (18, 44, 74, 92), die In einer Vernietungsposition des Abstützelements (20, 36, 70, 86) in der Gehäuse-Kolben-Baugruppe hinter Setzköpfen (14) von Nieten (10, 12) zwischen Kolben (4) und Kopplungselementen (8) und/oder zwischen Kopplungselementen (8) und Gehäuse (2) positionierbar sind.

2. Abstützelement (20, 36, 70, 86) nach Anspruch 1, **dadurch gekennzeichnet, dass** die Ambossabschnitte (18, 44, 74, 92) beschichtet und/oder gehärtet sind.

3. Abstützelement (20) nach Anspruch 1 oder 2, **gekennzeichnet durch** mindestens ein Angriffselement (24), an dem ein zur Positionierung, vorzugsweise Verdrehung oder Verschiebung, des Abstützelements (20) eingerichtetes Element angreifen kann.

4. Abstützelement (20) nach einem der Ansprüche 1 bis 3, **dadurch gekennzeichnet, dass** das Abstützelement (20) ringförmig ausgebildet ist und die Ambossabschnitte (18) durch radiale Vorsprünge gebildet werden.

5. Abstützelement (20, 36, 70, 86) nach einem der Ansprüche 1 bis 4, **dadurch gekennzeichnet, dass** das Abstützelement (20, 36, 70, 86) sternförmig ausgebildet ist und die Ambossabschnitte (18, 44, 74, 92) von den freien Endbereichen des Sterns gebildet werden.

6. Abstützelement (36, 70, 86) nach einem der Ansprüche 1 bis 5, **dadurch gekennzeichnet, dass** das Adstützelement (36, 70, 86) flexible Halteelemente (36, 66, 86) umfasst, an denen die Ambossabschnitte (44, 74, 92) vorgesehen sind.

7. Abstützetement (36, 70, 86) nach Anspruch 6, **dadurch gekennzeichnet, dass** die flexiblen Halteelemente (36, 66, 86) eine geringere Dicke aufweisen als die Ambossabschnitte (44, 74, 92).

8. Abstützelement (36, 70, 86) nach Anspruch 6 oder 7, **dadurch gekennzeichnet, dass** die flexiblen Halteelemente (36, 68, 86) nicht In alle Richtungen gleichermaßen flexibel sind.

9. Abstützelement (36, 70, 86) nach einem der Ansprüche 6 bis 8, **dadurch gekennzeichnet, dass** die flexiblen Halteelemente (36, 66, 86) in einen flexiblen Zustand zum Einbringen des Abstützelements (36, 70, 86) in die Gehäuse-Kolben-Baugruppe und In einen unflexiblen Zustand zum Vernieten bringbar sind.

10. Abstützelement (36, 70, 86) nach einem der Ansprüche 6 bis 9, **dadurch gekennzeichnet, dass** die flexiblen Halteelemente (36, 66, 86) einzeine, beweglich miteinander verbundene Kettenglieder (40, 78, 88) aufweisen.

11. Abstützelement (36, 70, 86) nach Anspruch 10, **dadurch gekennzeichnet, dass** die Kettenglieder (40, 78, 88) durch mindestens ein Band oder Seit mitelnander verbunden sind.

12. Abstützelement (38, 70, 86) nach Anspruch 11, **dadurch gekennzeichnet, dass** mindestens ein Band oder Seil (42) so durch mehrere oder entlang mehrerer Kettenglieder (40, 78, 88) geführt und mit mindestens einem Kettenglied (44) verbunden ist, dass durch Ziehen des Bands oder Seils (42) die Kettenglieder (40, 78, 88) miteinander verspannbar sind.

13. Abstützelement (70, 86) nach einem der Ansprüche 10 bis 12, **dadurch gekennzeichnet, dass** die Kettenglieder (78, 88) durch Scharniere (82, 90) miteinander verbunden sind.

14. Hilfsvorrichtung zum Vernieten einer Gehäuse-Kolben-Baugruppe für eine Kopplungseinrichtung, Insbesondere eine nasslaufende Lamellenkupplung oder eine Überbrückungskupplung einer hydrodynamischen Kopplungseinnchtung, umfassend ein Abstützelement (36, 70, 86) nach einem der Ansprüche 8 bis 13.

15. Hilfsvorrichtung nach Anspruch 14, **gekennzeichnet durch** eine erste Zentriereinrichtung zur Zentrierung des Abstützelements (36, 70, 86) in der Gehäuse-Kolben-Baugruppe.

16. Hilfsvorrichtung nach Anspruch 14 oder 15, **gekennzeichnet durch** eine zweite Zentriereinrichtung (32, 52, 56a, 56b, 62) zur Zentrierwechselwirkung mit dem Kolben während des Vernietens.

17. Hilfsvorrichtung nach einem der Ansprüche 14 bis 16, **gekennzeichnet durch** Führungselemente (34, 54, 76) zur Aufnahme und/oder Führung der flexiblen Halteelemente (36, 66, 86) des Abstützelements (36, 70, 86), wobei die Halteelemente (36, 66, 86) beweglich in den Führungselementen (34, 54, 76) aufgenommen sind oder entlang der Führungselemente (34, 54, 76) geführt werden, so dass die Ambossabschnitte (44, 74, 92) in eine Ruheposition und eine Vernietungsposition verlagert werden können.

18. Hilfsvorrichtung nach einem der Ansprüche 14 bis 16, **gekennzeichnet durch** eine Einrichtung (64, 68, 72) zum Einführen der flexiblen Halteelemente (36, 66, 86) In die Gehäuse-Kolben-Baugruppe und/oder eine Einrichtung (64, 68, 72) zum Herausziehen der flexiblen Halteelement (36, 66, 86) aus der Gehäuse-Kolben-Baugruppe.

19. Hilfsvorrichtung nach Anspruch 18, **gekennzeichnet durch** eine Zug- und/oder Schubstange (64), die zum Einbringen und/oder Herausziehen der flexiblen Halteelemente (36, 68, 86) mit dem Abstützelement (36, 70, 86) verbunden oder koppelbar ist.

20. Hilfsvorrichtung nach Anspruch 19, **gekennzeichnet durch** einen Hebelmechanismus (68) zur Betätigung der Zug- und/oder Schubstange (64).

21. Verfahren zur Montage einer Gehäuse-Kölben-Baugruppe einer Kopplungseinrichtung, insbesondere einer nasslaufenden Lamellenkupplung oder einer Überbrückungskupplung einer hydrodynamischen Kopplungseinrichtung, wobei der Kolben (4) mittels Kopplungselementen (8) bewegbar an einem Gehäuse (2) befestigt wird und als Befestgungselemente zwischen Kolben (4) und Kopplungselementen (8) und/oder zwischen Kopplungselementen (8) und Gehäuse (2) Niete (10, 12) vorgesehen sind, und wobei in einem ersten Schritt die Kopplungselemente (8) an einer Baugruppe von Kolben (4) und Gehäuse (2) vorgesehen werden und in einem zweiten Schritt die Kopplungselemente (8) mit der anderen Baugruppe von Kolben (4) und Gehäuse (2) vernietet werden
**dadurch gekennzeichnet, dass**
vor der Vernietung im zweiten Schritt mindestens ein Abstützelement (20, 36, 70, 86) in einer Vernietungsposition so zwischen Kopplungselementen (8) und der anderen Baugruppe von Kolben (4) oder Gehäuse (2) positioniert wird, dass Ambossabschnitte (18, 44, 74, 92) des Abstützelements (20, 36, 70, 86) hinter Setzköpfen (14) der jeweiligen Niete (10, 12) liegen und daraufhin eine Vernietung der Kopplungselemente (8) mit der anderen Baugruppe vorgenommen wird.

22. Verfahren nach Anspruch 21, **dadurch gekennzeichnet, dass** das Abstützelement (20) nach der Vernietung in der Gehäuse-Kolben-Baugruppe verbleibt und In einer Freigabeposition so positioniert wird, dass die Ambossabschnitte (18) des Abstützelements (20) eine Bewegung des Kolbens (4) nicht beeinträchtigen.

23. Verfahren nach Anspruch 22, **dadurch gekennzeichnet, dass** die Positionierung des Abstützelements (20) in der Freigabeposition durch eine Verdrehung oder Verschiebung stattfindet.

24. Verfahren nach Anspruch 22 oder 23, **dadurch gekennzeichnet, dass** das Abstützelement (20) in der Freigabeposition fixiert wird.

25. Verfahren nach einem der Ansprüche 22 bis 24, **dadurch gekennzeichnet, dass** die Positionierung mittels eines in das Gehäuse (2) einsetzbaren Zentrierelements stattfindet, wobei das Zentrierelement mindestens ein Gegenangriffselement zum Angriff an mindestens einem Angriffselement des Abstützelements (20) aufweist.

26. Verfahren nach Anspruch 25, **dadurch gekennzeichnet, dass** das Zentrierelement eine mit einem Gehäusedeckel (2) in einem zentralen Bereich desselben fest zu verbindende Deckelnabe (30) ist.

27. Verfahren nach Anspruch 21, **dadurch gekennzeichnet, dass** das Abstützelement (36, 70, 86) nach der Vernietung aus der Gehäuse-Kolben-Baugruppe entfernt wird.

28. Verfahren nach einem der Ansprüche 21 bis 27, **dadurch gekennzeichnet, dass** ein Abstützelement (38, 70, 86) nach einem der Ansprüche 1 bis 13 oder eine Hilfsvorrichtung nach einem der Ansprüche 14 bis 20 verwendet wird.

29. Verfahren nach Anspruch 28, **dadurch gekennzeichnet, dass** die Ambossabschnitte (44, 74, 92) in die Vernietungsposition gebracht werden, indem die flexible Halteelemente (36, 66, 86) des Abstützelements (36, 70, 86) entlang von Führungselementen (34, 54, 76) In die Gehäuse-Kolben-Baugruppe eingeführt werden.

30. Verfahren nach Anspruch 28 oder 29, **dadurch gekennzeichnet, dass** die Ambossabschnitte (44, 74, 92) aus der Vernietungsposition heraus gebracht werden, indem sie entlang von Führungselementen (34, 54, 76) aus der Gehäuse-Kolben-Baugruppe herausgezogen werden.

31. Verfahren nach einem der Ansprüche 28 bis 30, **dadurch gekennzeichnet, dass** die flexiblen Halteelemente (36, 66, 86) des Abstützelements (36, 70, 86) nach dem oder zum Positionieren in der Vernietungsposition in einen unflexiblen Zustand überführt werden.

32. Verfahren nach einem der Ansprüche 21 bis 31, **dadurch gekennzeichnet, dass** die Gehäuse-Kolben-Baugruppe nach der Montage einem automatisierten Inspektionsprozess unterzogen wird.

## Claims

1. Supporting element (20, 36, 70, 86) for use in a casing-piston sub-assembly for a coupling device, in particular a wet-running multiple-disc clutch or a bridging clutch of a hydrodynamic coupling device, comprising anvil portions (18, 44, 74, 92) which can be positioned in a riveting position of the supporting element (20, 36, 70, 86) in the casing-piston sub-assembly behind die heads (14) of rivets (10, 12) between piston (4) and coupling elements (8) and/or between coupling elements (8) and casing (2).

2. Supporting element (20, 36, 70, 86) according to Claim 1, **characterized in that** the anvil portions (18, 44, 74, 92) are coated and/or hardened.

3. Supporting element (20) according to Claim 1 or 2, **characterized by** at least one working element (24) on which an element set up for positioning, preferably rotation or displacement, of the supporting element (20) can work.

4. Supporting element (20) according to one of Claims 1 to 3, **characterized in that** the supporting element (20) is formed to be annular and the anvil portions (18) are formed by radial projections.

5. Supporting element (20, 36, 70, 86) according to one of Claims 1 to 4, **characterized in that** the supporting element (20, 36, 70, 86) is formed to be star-shaped and the anvil portions (18, 44, 74, 92) are formed by the free end regions of the star.

6. Supporting element (36, 70, 86) according to one of Claims 1 to 5, **characterized in that** the supporting element (36, 70, 86) comprises flexible retaining elements (36, 66, 86) on which the anvil portions (44, 74, 92) are provided.

7. Supporting element (36, 70, 86) according to Claim 6, **characterized in that** the flexible retaining elements (36, 66, 86) have a smaller thickness than the anvil portions (44, 74, 92).

8. Supporting element (36, 70, 86) according to Claim 6 or 7, **characterized in that** the flexible retaining elements (36, 66, 86) are not equally flexible in all directions.

9. Supporting element (36, 70, 86) according to one of Claims 6 to 8, **characterized in that** the flexible retaining elements (36, 66, 86) can be moved into a flexible state for introduction of the supporting element (36, 70, 86) into the casing-piston sub-assembly and into an inflexible state for riveting.

10. Supporting element (36, 70, 86) according to one of Claims 6 to 9, **characterized in that** the flexible retaining elements (36, 66, 86) have individual chain links (40, 78, 88) which are movably connected to one another.

11. Supporting element (36, 70, 86) according to Claim 10, **characterized in that** the chain links (40, 78, 88) are connected to one another by at least one strap or wire.

12. Supporting element (36, 70, 86) according to Claim 11, **characterized in that** at least one strap or wire (42) is guided through several or along several chain links (40, 78, 88) and is connected to at least one chain link (44) in such a manner that the chain links (40, 78, 88) can be interlocked with one another by pulling the strap or wire (42).

13. Supporting element (70, 86) according to one of Claims 10 to 12, **characterized in that** the chain links (78, 88) are connected to one another by hinges (82, 90).

14. Auxiliary device for riveting a casing-piston sub-assembly for a coupling device, in particular a wet-running multiple-disc clutch or a bridging clutch of a hydrodynamic coupling device, comprising a supporting element (36, 70, 86) according to one of Claims 6 to 13.

15. Auxiliary device according to Claim 14, **characterized by** a first centring device for centring of the supporting element (36, 70, 86) in the casing-piston sub-assembly.

16. Auxiliary device according to Claim 14 or 15, **characterized by** a second centring device (32, 52, 56a, 56b, 62) for centring interaction with the piston during riveting.

17. Auxiliary device according to one of Claims 14 to 16, **characterized by** guide elements (34, 54, 76) for receiving and/or guiding the flexible retaining elements (36, 66, 86) of the supporting element (36, 70, 86), wherein the retaining elements (36, 66, 86) are received movably in the guide elements (34, 54, 76) or are guided along the guide elements (34, 54, 76) so that the anvil portions (44, 74, 92) can be moved into an idle position and a riveting position.

18. Auxiliary device according to one of Claims 14 to 16, **characterized by** a device (64, 68, 72) for introduction of the flexible retaining elements (36, 66, 86) into the casing-piston sub-assembly and/or a device (64, 68, 72) for pulling the flexible retaining elements (36, 66, 86) out of the casing-piston sub-assembly.

19. Auxiliary device according to Claim 18, **characterized by** a pull and/or push rod (64) which is connected or can be coupled to the supporting element (36, 70, 86) for introduction and/or removal of the flexible retaining elements (36, 66, 86).

20. Auxiliary device according to Claim 19, **characterized by** a lever mechanism (68) for activating the pull and/or push rod (64).

21. Method for assembling a casing-piston sub-assembly for a coupling device, in particular a wet-running multiple-disc clutch or a bridging clutch of a hydrodynamic coupling device, wherein the piston (4) is fastened movably on a casing (2) by means of coupling elements (8) and rivets (10, 12) are provided as fastening elements between piston (4) and coupling elements (8) and/or between coupling elements (8) and casing (2), and wherein, in a first step, the coupling elements (8) are provided on a sub-assembly of piston (4) and casing (2) and, in a second step, the coupling elements (8) are riveted to the other sub-assembly of piston (4) and casing (2)
**characterized in that**,
prior to the riveting in the second step, at least one supporting element (20, 36, 70, 86) is positioned in a riveting position between coupling elements (8) and the other sub-assembly of piston (4) or casing (2) in such a manner that anvil portions (18, 44, 74, 92) of the supporting element (20, 36, 70, 86) lie behind die heads (14) of respective rivets (10, 12) and thereafter a riveting of the coupling elements (8) to the other sub-assembly is carried out.

22. Method according to Claim 21, **characterized in that** the supporting element (20) remains in the casing-piston sub-assembly after riveting and is positioned in a release position such that the anvil portions (18) of the supporting element (20) do not impair a movement of the piston (4).

23. Method according to Claim 22, **characterized in that** the positioning of the supporting element (20) in the release position takes place by a rotation or displacement.

24. Method according to Claim 22 or 23, **characterized in that** the supporting element (20) is fixed in the release position.

25. Method according to one of Claims 22 to 24, **characterized in that** the positioning takes place by means of a centring element which can be inserted into the casing (2), wherein the centring element has at least one counter-engagement element for working on at least one working element of the supporting element (20).

26. Method according to Claim 25, **characterized in that** the centring element is a cover hub (30) to be fixedly connected to a casing cover (2) in a central region thereof.

27. Method according to Claim 21, **characterized in that** the supporting element (36, 70, 86) is removed from the casing-piston sub-assembly after the riveting.

28. Method according to one of Claims 21 to 27, **characterized in that** a supporting element (36, 70, 86) according to one of Claims 1 to 13 or an auxiliary device according to one of Claims 14 to 20 is used.

29. Method according to Claim 28, **characterized in that** the anvil portions (44, 74, 92) are moved into the riveting position **in that** the flexible retaining elements (36, 66, 86) of the supporting element (36, 70, 86) are introduced along guide elements (34, 54, 76) into the casing-piston sub-assembly.

30. Method according to Claim 28 or 29, **characterized in that** the anvil portions (44, 74, 92) are moved out of the riveting position **in that** they are pulled along guide elements (34, 54, 76) out of the casing-piston sub-assembly.

31. Method according to one of Claims 28 to 30, **characterized in that** the flexible retaining elements (36, 66, 86) of the supporting element (36, 70, 86) are transferred into an inflexible state after or for positioning in the riveting position.

32. Method according to one of Claims 21 to 31, **characterized in that** the casing-piston sub-assembly undergoes an automated inspection process after assembly.

## Revendications

1. Elément de support (20, 36, 70, 86) pour l'utilisation dans un module boîtier-piston pour un dispositif d'accouplement, notamment un embrayage à disques humide ou un embrayage de pontage d'un dispositif d'accouplement hydrodynamique, comprenant des portions d'enclume (18, 44, 74, 92) qui peuvent être positionnées dans une position de rivetage de l'élément de support (20, 36, 70, 86) dans le module boîtier-piston derrière des têtes de pose (14) de rivets (10, 12) entre le piston (4) et des éléments d'accouplement (8) et/ou entre des éléments d'accouplement (8) et le boîtier (2).

2. Elément de support (20, 36, 70, 86) selon la revendication 1, **caractérisé en ce que** les portions d'enclume (18, 44, 74, 92) sont revêtues et/ou durcies.

3. Elément de support (20) selon la revendication 1 ou 2, **caractérisé par** au moins un élément d'engagement (24) sur lequel peut s'engager un élément prévu pour le positionnement, de préférence la rotation ou le coulissement, de l'élément de support (20).

4. Elément de support (20) selon l'une quelconque des revendications 1 à 3, **caractérisé en ce que** l'élément de support (20) est réalisé sous forme annulaire et les portions d'enclume (18) sont formées par des saillies radiales.

5. Elément de support (20, 36, 70, 86) selon l'une quelconque des revendications 1 à 4, **caractérisé en ce que** l'élément de support (20, 36, 70, 86) est réalisé sous forme d'étoile et les portions d'enclume (18, 44, 74, 92) sont formées par les régions d'extrémité libre de l'étoile.

6. Elément de support (36, 70, 86) selon l'une quelconque des revendications 1 à 5, **caractérisé en ce que** l'élément de support (36, 70, 86) comprend des éléments de retenue flexibles (36, 66, 86) sur lesquels sont prévues les portions d'enclume (44, 74, 92).

7. Elément de support (36, 70, 86) selon la revendication 6, **caractérisé en ce que** les éléments de retenue flexibles (36, 66, 86) présentent une plus faible épaisseur que les portons d'enclume (44, 74, 92).

8. Elément de support (36, 70, 86) selon la revendication 6 ou 7, **caractérisé en ce que** les éléments de retenue flexibles (36, 66, 86) ne sont pas flexibles de manière uniforme dans toutes les directions.

9. Elément de support (36, 70, 86) selon l'une quelconque des revendications 6 à 8, **caractérisé en ce que** les éléments de retenue flexibles (36, 66, 86) peuvent être amenés dans un état flexible pour introduire l'élément de support (36, 70, 86) dans le module boîtier-piston et dans un état non flexible pour le rivetage.

10. Elément de support (36, 70, 86) selon l'une quelconque des revendications 6 à 9, **caractérisé en ce que** les éléments de retenue flexibles (36, 66, 86) présentent des maillons de chaîne (40, 78, 88) individuels, connectés les uns aux autres de manière mobile.

11. Elément de support (36, 70, 86) selon la revendication 10, **caractérisé en ce que** les maillons de chaîne (40, 78, 88) sont connectés les uns aux autres par au moins une bande ou un câble.

12. Elément de support (36, 70, 86) selon la revendication 11, **caractérisé en ce qu'**au moins une bande ou un câble (42) est guidé(e) à travers plusieurs ou le long de plusieurs maillons de chaîne (40, 78, 88) et est connecté(e) à au moins un maillon de chaîne (44) de telle sorte qu'en tirant sur la bande ou le câble (42), les maillons de chaîne (40, 78, 88) puissent être serrés les uns contre les autres.

13. Elément de support (70, 86) selon l'une quelconque des revendications 10 à 12, **caractérisé en ce que** les maillons de chaîne (78, 88) sont connectés les uns aux autres par des charnières (82, 90).

14. Dispositif auxiliaire pour le rivetage d'un module boîtier-piston pour un dispositif d'accouplement, notamment un embrayage à disques humide ou un embrayage de pontage d'un dispositif d'accouplement hydrodynamique, comprenant un élément de support (36, 70, 86) selon l'une quelconque des revendications 6 à 13.

15. Dispositif auxiliaire selon la revendication 14, **caractérisé par** un premier dispositif de centrage pour le centrage de l'élément de support (36, 70, 86) dans le module boîtier-piston.

16. Dispositif auxiliaire selon la revendication 14 ou 15, **caractérisé par** un deuxième dispositif de centrage (32, 52, 56a, 56b, 62) pour l'interaction de centrage avec le piston pendant le rivetage.

17. Dispositif auxiliaire selon l'une quelconque des revendications 14 à 16, **caractérisé par** des éléments de guidage (34, 54, 76) pour recevoir et/ou guider les éléments de retenue flexibles (36, 66, 86) de l'élément de support (36, 70, 86), les éléments de retenue (36, 66, 86) étant reçus de manière mobile dans les éléments de guidage (34, 54, 76) ou étant guidés le long des éléments de guidage (34, 54, 76) de telle sorte que les portions d'enclume (44, 74, 92) puissent être déplacées dans une position de repos et une position de rivetage.

18. Dispositif auxiliaire selon l'une quelconque des revendications 14 à 16, **caractérisé par** un dispositif (64, 68, 72) pour introduire les éléments de retenue flexibles (36, 66, 86) dans le module boîtier-piston et/ou un dispositif (64, 68, 72) pour ressortir les éléments de retenue flexibles (36, 66, 86) du module boîtier-piston.

19. Dispositif auxiliaire selon la revendication 18, **caractérisé par** une tige de traction et/ou de poussée (64) qui est connectée ou peut être accouplée à l'élément de support (36, 70, 86) pour introduire et/ou ressortir les éléments de retenue flexibles (36, 66, 86).

20. Dispositif auxiliaire selon la revendication 19, **caractérisé par** un mécanisme de levier (68) pour l'actionnement de la tige de traction et/ou de poussée (64).

21. Procédé de montage d'un module boîtier-piston d'un dispositif d'accouplement, notamment un embrayage à disques humide ou un embrayage de pontage d'un dispositif d'accouplement hydrodynamique, le piston (4) étant fixé de manière déplaçable sur un boîtier (2) au moyen d'éléments d'accouplement (8) et des rivets (10, 12) étant prévus en tant qu'éléments de fixation entre le piston (4) et des éléments d'accouplement (8) et/ou entre des éléments d'accouplement (8) et le boîtier (2), et dans une première étape, les éléments d'accouplement (8) étant prévus sur un module de piston (4) et boîtier (2) et dans une deuxième étape, les éléments d'accouplement (8) étant rivetés avec l'autre module de piston (4) et boîtier (2),
**caractérisé en ce que**
avant le rivetage dans la deuxième étape, au moins un élément de support (20, 36, 70, 86) est positionné dans une position de rivetage entre des éléments d'accouplement (8) et l'autre module de piston (4) ou boîtier (2) de telle sorte que des portions d'enclume (18, 44, 74, 92) de l'élément de support (20, 36, 70, 86) se situent derrière des têtes de pose (14) des rivets respectifs (10, 12) et qu'un rivetage des éléments d'accouplement (8) à l'autre module soit ensuite effectué.

22. Procédé selon la revendication 21, **caractérisé en ce que** l'élément de support (20) reste après le rivetage dans le module boîtier-piston et est positionné dans une position de libération de telle sorte que les portions d'enclume (18) de l'élément de support (20) n'affectent pas un mouvement du piston (4).

23. Procédé selon la revendication 22, **caractérisé en ce que** le positionnement de l'élément de support (20) dans la position de libération a lieu par une rotation ou un coulissement.

24. Procédé selon la revendication 22 ou 23, **caractérisé en ce que** l'élément de support (20) est fixé dans la position de libération.

25. Procédé selon l'une quelconque des revendications 22 à 24, **caractérisé en ce que** le positionnement a lieu au moyen d'un élément de centrage pouvant être inséré dans le boîtier (2), l'élément de centrage présentant au moins un élément d'engagement conjugué pour l'engagement avec au moins un élément d'engagement de l'élément de support (20).

26. Procédé selon la revendication 25, **caractérisé en ce que** l'élément de centrage est un moyeu de couvercle (30) devant être connecté fixement à un couvercle de boîtier (2) dans une région centrale de celui-ci.

27. Procédé selon la revendication 21, **caractérisé en ce que** l'élément de support (36, 70, 86) est enlevé du module boîtier-piston après le rivetage.

28. Procédé selon l'une quelconque des revendications 21 à 27, **caractérisé en ce qu'**un élément de support (36, 70, 86) selon l'une quelconque des revendications 1 à 13 ou un dispositif auxiliaire selon l'une quelconque des revendications 14 à 20 est utilisé.

29. Procédé selon la revendication 28, **caractérisé en ce que** les portions d'enclume (44, 74, 92) sont amenées dans la position de rivetage, les éléments de retenue flexibles (36, 66, 86) de l'élément de support (36, 70, 86) sont introduits le long d'éléments de guidage (34, 54, 76) dans le module boîtier-piston.

30. Procédé selon la revendication 28 ou 29, **caractérisé en ce que** les portions d'enclume (44, 74, 92) sont amenées hors de la position de rivetage lorsqu'elles sont retirées du module boîtier-piston le long d'éléments de guidage (34, 54, 76).

31. Procédé selon l'une quelconque des revendications 28 à 30, **caractérisé en ce que** les éléments de retenue flexibles (36, 66, 86) de l'élément de support (36, 70, 86) sont transférés dans un état non flexible après le positionnement ou pour le positionnement dans la position de rivetage.

32. Procédé selon l'une quelconque des revendications 21 à 31, **caractérisé en ce que** le module boîtier-piston est soumis après le montage à un processus d'inspection automatisé.
